# EUROPEAN PATENT APPLICATION

(11) **EP 3 131 022 A1**
(43) Date of publication of application: **15.02.2017**
(21) Application number: 16184036.8
(22) Date of filing: 12.08.2016
(51) Int. Cl.: G06F 17/30

(54) **METHOD AND APPARATUS FOR PROCESSING MANAGING MULTIMEDIA CONTENT**

(30) Priority: 14.08.2015 IN 2515DE2015; 10.06.2016 KR 20160072710
(71) Applicant: Samsung Electronics Co., Ltd., Suwon-si, Gyeonggi-do 16677 (KR)
(72) Inventor: KUMAR, Sumit, UP 201303 Delhi (IN); CHAUHAN, Nikhil, UP 201303 Delhi (IN); MISHRA, Vinod Kumar, UP 201303 Delhi (IN)
(74) Representative: Birchenough, Lewis

(57) **Abstract**

A method and an apparatus for processing multimedia content are provided. The electronic apparatus is configured for integrally displaying on a browser media interface at least one multimedia content included in at least one web page. The method includes receiving a first user input for selecting at least one multimedia content included in at least one web page through a browser, determining, from among the selected at least one multimedia content based on the first user input, at least one multimedia content renderable by a browser media interface that integrates and renders the selected at least one multimedia content, and displaying, on the browser media interface, the determined at least one multimedia content. The browser media interface overlaps and is displayed on the browser.

## Description

### CROSS-REFERENCE TO RELATED APPLICATION(S)

This application claims the benefit under 35 U.S.C. § 119(e) of an Indian provisional application filed on August 14, 2015 in the Indian Patent Office and assigned Serial number 2515/DEL/2015, and under 35 U.S.C. § 119(a) of a Korean patent application filed on June 10, 2016 in the Korean Intellectual Property Office and assigned Serial number 10-2016-0072710, the entire disclosures of each of which is incorporated herein by reference.

### TECHNICAL FIELD

The present disclosure relates to methods and electronic apparatuses for processing multimedia content. More particularly, the present disclosure relates to a method and electronic apparatus for rendering, on a browser, multimedia content included in a web page.

### BACKGROUND

In today's world, the Internet has taken priority over televisions, cinema screens, or other audio visual devices to access and play multimedia content. Due to improvements leading to a higher bit rate or bandwidth, streaming multimedia content has become generalized, and the number of websites streaming the multimedia content have also increased.

As a result, a user can enable a certain website to stream different pieces of multimedia content, and further enable one web browser to stream multimedia content included in a plurality of websites. However, in order to view desired multimedia content from among multimedia content provided by different websites, the user needs to click a tab where the desired multimedia content is displayed from among several opened tabs of a web browser. Such selecting of the tab may not be inconvenient for a short period of time, but may be inconvenient and cumbersome for the user when multimedia content is viewed for a long period of time. Also, buffering of multimedia content on different tabs opened in a web browser to render different websites may be slow due to overload of the web browser.

Accordingly, a current method is unable to provide high quality experience while rendering multimedia content provided by at least one website.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide methods and electronic apparatuses for providing, to a user, an interface that integrates and reproduces at least one multimedia content provided by at least one website, on a browser.

Another aspect of the present disclosure will be set forth in part in the description which follows and, in part, will be apparent from the description, or may be learned by practice of the presented embodiments.

According to various embodiments of the present disclosure, a method of displaying, by an electronic apparatus, multimedia content is provided. The method includes receiving a first user input for selecting at least one multimedia content included in at least one web page through a browser, determining, from among the selected at least one multimedia content based on the first user input, at least one multimedia content renderable by a browser media interface that integrates and renders the selected at least one multimedia content, and displaying, on the browser media interface, the determined at least one multimedia content, wherein the browser media interface overlaps and is displayed on the browser.

The receiving of the first user input may include receiving at least one user input from among a touch input of touching a thumbnail image of the at least one multimedia content or a predetermined region including the thumbnail image, a voice command of selecting the at least one multimedia content, a gesture input of selecting the at least one multimedia content, and a human-eye gesture input of selecting the at least one multimedia content.

The determining of the at least one multimedia content may include determining the at least one multimedia content renderable by the browser or executable on the browser media interface.

The determining of the at least one multimedia content may include: extracting a uniform resource locator (URL) including the selected at least one multimedia content by querying a document object model (DOM) of the at least one web page, and obtaining a file of the selected at least one multimedia content and metadata of the selected at least one multimedia content from the extracted URL.

The displaying of the determined at least one multimedia content may include: generating a playlist including the renderable at least one multimedia content and sequentially rendering the included at least one multimedia content, and displaying, in a first region of the browser media interface, the playlist.

The method may further include buffering data of the at least one multimedia content comprised in the playlist through at least one buffering method from among serial buffering, parallel buffering, selected multimedia content buffering, and user selection-based buffering.

The method may further include displaying, in a second region of the browser media interface, a search region for receiving a second user input of searching for at least one multimedia content rendered on the web page or at least one multimedia content stored in a local memory included in the electronic apparatus.

The method may further include displaying, in a third region of the browser media interface, a recommendation region for recommending at least one multimedia content related to the determined at least one multimedia content, wherein the related at least one multimedia content may be recommended based on the playlist generated by a user who selected the at least one multimedia content, profile information of the user, setting information set by the user, and a multimedia content search history of the user.

The method may further include, before the receiving of the first user input: recognizing existence of at least one multimedia content included in the at least one web page, and displaying, on the browser media interface, a thumbnail image of the recognized at least one multimedia content by extracting a URL of a web page comprising the recognized at least one multimedia content, wherein the receiving of the first user input may include receiving a user input of selecting the thumbnail image.

The method may further include, before the receiving of the first user input: receiving a third user input of executing, by the electronic apparatus, the browser media interface, and executing the browser media interface based on the third user input.

According to various embodiments of the present disclosure, an electronic apparatus for displaying multimedia content is provided. The electronic apparatus includes a user input unit configured to receive a first user input of selecting at least one multimedia content included in at least one web page and displayed through a browser, a processor configured to control for determining, from among at least one multimedia content selected based on the first user input, at least one multimedia content renderable by a browser media interface that integrates and renders the selected at least one multimedia content, and a display unit configured to display, on the browser media interface, the determined at least one multimedia content, wherein the browser media interface overlaps and is displayed on the browser.

The user input unit may further be configured to receive at least one user input from among a touch input of touching a thumbnail image of the at least one multimedia content or a predetermined region including the thumbnail image, a voice command of selecting the at least one multimedia content, a gesture input of selecting the at least one multimedia content, and a human-eye gesture input of selecting the at least one multimedia content.

The processor may further be configured to control for determining the at least one multimedia content renderable by the browser or executable on the browser media interface.

The processor may further be configured to control for extracting a URL including the selected at least one multimedia content by querying a DOM of the at least one web page, and obtain a file of the selected at least one multimedia content and metadata of the selected at least one multimedia content from the extracted URL.

The processor may further be configured to control for generating a playlist comprising the renderable at least one multimedia content and sequentially rendering the comprised at least one multimedia content, and display, in a first region of the browser media interface, the playlist.

The processor may be further configured to control for buffering data of the at least one multimedia content included in the playlist through at least one buffering method from among serial buffering, parallel buffering, selected multimedia content buffering, and user selection-based buffering.

The user input may be further configured to receive a second user input of searching for at least one multimedia content rendered on the web page or at least one multimedia content stored in a local memory included in the electronic apparatus, and the processor may further be configured to control for displaying, in a second region of the browser media interface, a search region for receiving the second user input.

The processor may be further be configured to control for generating a recommendation region for recommending at least one multimedia content related to the determined at least one multimedia content based on the playlist generated by a user who selected the at least one multimedia content, profile information of the user, setting information set by the user, and a multimedia content search history of the user, and the display unit may further be configured to display, in a third region of the browser media interface, the recommendation region.

The processor may further be configured to control for recognizing existence of at least one multimedia content included in the at least one web page and generating a thumbnail image of the recognized at least one multimedia content by extracting a URL of a web page including the recognized at least one multimedia content, the display unit may further be configured to display, on the browser media interface, the thumbnail image, and the user input unit may further be configured to receive a user input of selecting the thumbnail image.

The user input unit may further be configured to receive a third user input of executing, by the electronic apparatus, the browser media interface, and the processor may further be configured to control for executing the browser media interface based on the third user input.

According to various embodiments of the present disclosure, a non-transitory recording medium having recorded thereon at least one program comprising commands, which when executed by a computer, performs any of the methods above.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a conceptual diagram for describing a method of displaying, by an electronic apparatus, at least one multimedia content included in at least one web page, according to various embodiments of the present disclosure;
FIG. 2 is a block diagram of components of an electronic apparatus according to various embodiments of the present disclosure;
FIG. 3 is a flowchart of a method of displaying, by an electronic apparatus, at least one multimedia content on a browser media interface, according to various embodiments of the present disclosure;
FIG. 4 is a flowchart of a method of displaying, by an electronic apparatus, at least one multimedia content on a browser media interface, according to various embodiments of the present disclosure;
FIG. 5 is a flowchart of a method of determining, by an electronic apparatus, multimedia content renderable on a browser media interface, according to various embodiments of the present disclosure;
FIG. 6 is a flowchart of a method of loading, by an electronic apparatus, multimedia content from a website, according to various embodiments of the present disclosure;
FIG. 7A illustrates an example of a hypertext mark-up language (HTML) code of a web page including multimedia content according to various embodiments of the present disclosure; and
FIG. 7B is a conceptual diagram illustrating an example of a document object model (DOM) of the web page according to various embodiments of the present disclosure;
FIG. 8A illustrates a browser media interface provided by an electronic apparatus, according to various embodiments of the present disclosure; and
FIG. 8B illustrates a playlist displayed on the browser media interface according to various embodiments of the present disclosure;
FIG. 9 is a diagram for describing a method of adding, by an electronic apparatus, multimedia content through a browser media interface, according to various embodiments of the present disclosure;
FIG. 10 is a flowchart of a method of generating and storing, by an electronic apparatus, a playlist through a browser media interface, according to various embodiments of the present disclosure;
FIG. 11A is a diagram for describing a method of displaying, by an electronic apparatus, a multimedia content search region on a browser media interface, according to various embodiments of the present disclosure; and
FIG. 11B is a diagram for describing a method of adding multimedia content found on the browser media interface to a playlist according to various embodiments of the present disclosure;
FIG. 12 is a diagram for describing a method of generating and displaying, by an electronic apparatus, a multimedia content recommendation region on a browser media interface, according to various embodiments of the present disclosure;
FIG. 13A is a diagram for describing a method of receiving, by an electronic apparatus, a user input of selecting multimedia content displayed on a web browser, according to various embodiments of the present disclosure; and
FIG. 13B is a diagram for describing a method of adding multimedia content selected based on the user input to a playlist of a browser media interface according to various embodiments of the present disclosure;
FIG. 14 is a flowchart of a method of displaying, by an electronic apparatus, at least one multimedia content included in at least one web page on a browser media interface, according to various embodiments of the present disclosure;
FIG. 15 is a diagram for describing a method of executing, by an electronic apparatus, a browser media interface, according to various embodiments of the present disclosure;
FIG. 16 is a flowchart of a method of displaying, by an electronic apparatus, multimedia content on a browser media interface, according to various embodiments of the present disclosure;
FIG. 17 is a flowchart of a method of displaying, by an electronic apparatus, at least one multimedia content selected based on a user input on a browser media interface, according to various embodiments of the present disclosure; and
FIG. 18 is a block diagram of components of an electronic apparatus, according to various embodiments of the present disclosure.

Throughout the drawings, it should be noted that like reference numbers are used to depict the same or similar elements, features, and structures

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

The terms used herein may be used to describe various components, but the components are not limited by the terms. The terms are used to distinguish one component from another.

In the specification, when a region is "connected" to another region, the regions may not only be "directly connected", but may also be "electrically connected" via another device therebetween. Here, when one region is "connected" to another region, the region may perform data communication with the other region through signal transmission and reception.

The terms "includes", "including", or any other variations thereof, are intended to cover a non-exclusive inclusion, such that a process or method that includes a list of operations does not include only those operations but may include other operations not expressly listed or inherent to such process or method. Similarly, one or more devices or sub-systems or elements or structures or components proceeded by "includes... a" does not, without more constraints, preclude the existence of other devices or other sub-systems or other elements or other structures or other components or additional devices or additional sub-systems or additional elements or additional structures or additional components.

Unless otherwise defined, all technical and scientific terms used herein have the same meaning as commonly understood by one of ordinary skill in the art to which this disclosure belongs. The system, methods, and examples provided herein are illustrative only and not intended to be limiting.

Various embodiments of the present disclosure will be described below in detail with reference to the accompanying drawings.

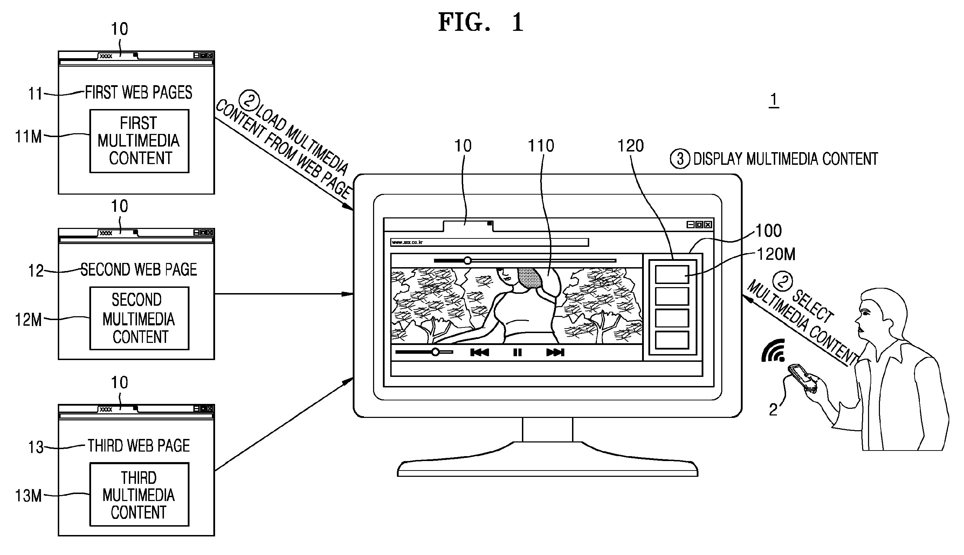

FIG. 1 is a conceptual diagram for describing a method of displaying, by an electronic apparatus 1, at least one multimedia content, i.e., first through third multimedia content 1M, 2M and 3M, included in at least one web page, i.e., first through third web pages 11 through 13, according to various embodiments of the present disclosure.

Referring to FIG. 1, the electronic apparatus 1 may display a browser media interface 100 that is overlapped on a web browser 10. The electronic apparatus 1 may integrally display, on the browser media interface 100, the first through third multimedia content 1M, 2M and 3M provided by the first through third web pages 11, 12, and 13 through the web browser 10. The first through third multimedia content 1M, 2M and 3M may include data corresponding to at least one of, for example, an image, audio, a video, and a flash work.

According to an embodiment, a user using the electronic apparatus 1 may select at least one of the first through third multimedia content 1M, 2M and 3M provided by the first through third web pages 11 through 13, by using a remote control device 2 controlling the electronic apparatus 1. The electronic apparatus 1 may be, for example, a personal computer (PC), a laptop computer, a tablet PC, a personal digital assistant (PDA), a media player, a mobile phone, a smart phone, a game console, or another mobile or non-mobile computing device. However, the electronic apparatus 1 is not limited thereto. According to an embodiment, the electronic apparatus 1 may be a smart television (TV) for loading and playing multimedia content included in a web page. The electronic apparatus 1 may receive a user input of selecting any one of the first through third multimedia content 1M, 2M and 3M through the remote control device 2, for example, a remote controller.

Upon receiving the user input of selecting the first through third multimedia content 1M, 2M and 3M, the electronic apparatus 1 may load the first through third multimedia content 1M, 2M and 3M from the first through third web pages 11, 12, and 13. According to an embodiment, the electronic apparatus 1 may load the first through third multimedia content 1M, 2M and 3M via a method of fetching the first through third multimedia content 1M, 2M and 3M from servers of the first through third web pages 11, 12, and 13 through a query of a document object model (DOM) tree of the first through third web pages 11, 12, and 13.

After loading the first through third multimedia content1M, 2M and 3M, the electronic apparatus 1 displays, on the browser media interface 100, multimedia content 110 and 120M renderable (playable) on the browser media interface 100 from among the first through third multimedia content1M, 2M and 3M. According to an embodiment, the electronic apparatus 1 may determine the multimedia content 110 and 120M that are renderable by the browser 10 or executable on the browser media interface 100, from among the first through third multimedia content 1M, 2M and 3M. The electronic apparatus 1 may play the multimedia content 110 and 120M that are determined to be renderable on the browser media interface 100. According to an embodiment, the electronic apparatus 1 may store the multimedia content 110 and 120M in a playlist 120, and sequentially play the multimedia content 110 and 120M stored in the playlist 120.

According to an embodiment, the electronic apparatus 1 may search for multimedia content provided by the first through third web pages 11 through 13, and display multimedia content renderable by the browser media interface from among found multimedia content. Also, the electronic apparatus 1 may recommend multimedia content related to multimedia content viewed by the user, based on a multimedia content search history of the user.

Generally, when multimedia content is viewed by using a PC or a smart TV capable of driving a web browser and multimedia content to be viewed is provided by different websites, a user needs to click a tab of a web browser to select the multimedia content. Also, when the selected multimedia content is not renderable by the web browser, the user needs to select and execute another web browser capable of rendering the selected multimedia content. In this case, the user needs to perform troublesome selecting processes to view the selected multimedia content and thus may be fatigued, thereby causing inefficiency. Also, the web browser may be overloaded while buffering multimedia content provided by a plurality of web pages opened on the web browser, and thus buffering of the multimedia content may be slowed. For example, the web browser may be further loaded when the user is watching a certain event, a sports game, or a certain movie for a certain period of time.

The electronic apparatus 1 according to an embodiment may provide intuitive user experience (UX) by integrating and playing, on the browser media interface 100, the first through third multimedia content 1M, 2M and 3M provided by the first through third web pages 11 through 13 through the web browser 10. Also, the electronic apparatus 1 may resolve a viewing limitation caused by buffering even when a plurality of multimedia contents is viewed by storing the multimedia content 110 and 120M renderable on the browser media interface 100 in a playlist and buffering the multimedia content 110 and 120M in parallel. Accordingly, the electronic apparatus 1 is efficient in displaying a plurality of multimedia contents provided by different web pages.

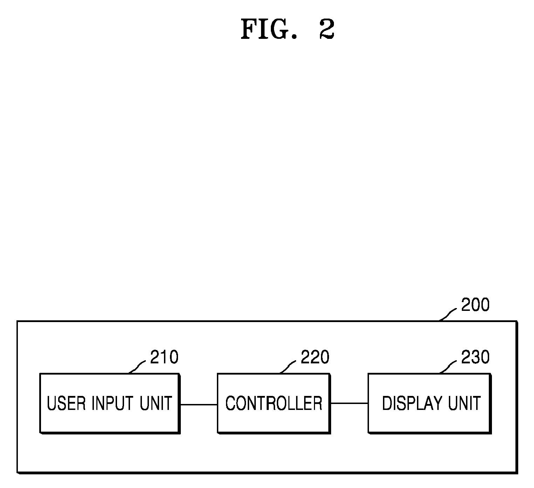

FIG. 2 is a block diagram of components of an electronic apparatus 200 according to various embodiments of the present disclosure.

Referring to FIG. 2, the electronic apparatus 200 may include a user input unit 210, a processor or controller 220, and a display or display unit 230.

The user input or user input unit 210 may receive a user input of selecting at least one multimedia content displayed on at least one web page through a browser. The user input unit 210, shown in FIG. 2, may include an input device, such as a keyboard, a mouse, a joystick, or an electronic pen, but is not limited thereto. According to an embodiment, the user input unit 210 may include at least one of a touch pad operable via contact of a finger of a user, and a button operable via push manipulation of the user. Also, the user input unit 210 may include a voice recognition module for recognizing voice of the user and receiving a voice command. Referring to FIG. 1, the user input unit 210 may be a remote controller (e.g., the remote control device 2 of FIG. 1) that operates the electronic apparatus 200 and receives the user input of selecting multimedia content.

According to an embodiment, the user input unit 210 may receive a thumbnail image of at least one multimedia content or a touch input of touching a predetermined region where the thumbnail image is located. Also, the user input unit 210 may receive at least one user input from among a voice command, gesture input, and human-eye gesture input of selecting at least one multimedia content. According to an embodiment, the electronic apparatus 200 may further include a memory storing a playlist of at least one multimedia content renderable in a browser media interface, and the user input unit 210 may receive a user input of searching for at least one multimedia content stored in the memory. Also, the user input unit 210 may receive a user input of enabling the electronic apparatus 200 to execute the browser media interface.

Referring to FIG. 2, the controller 220 may determine multimedia content renderable by the browser media interface from among at least one multimedia content selected based on the user input received by the user input unit 210, and control the display unit 230 to render the determined multimedia content on the browser media interface. According to an embodiment, the controller 220 may include a processor having media data processing and/or media data managing capability to determine whether at least one multimedia content is renderable in a web browser or renderable on a browser media interface, and play the determined multimedia content. The controller 220 may include, for example, one or more microprocessors, a microcomputer, a microcontroller, a digital signal processor, a central processing unit (CPU), a state machine, a calculation circuit, and /or another device for processing or manipulating a signal based on an operation command. However, the controller 220 is not limited thereto, and may include the same type and/or different types of multi-cores, different types of CPUs, and a graphic processing unit (GPU) having an acceleration function. According to an embodiment, the controller 220 may be realized as a hardware component, such as a field programmable gate array (FPGA) or an application specific integrated circuit (ASIC). According to an embodiment, the controller 220 may execute software having a program module and an algorithm executed by a computer, which are stored in the electronic apparatus 200.

According to an embodiment, with reference to FIG. 2, the controller 220 may include a communication module (not shown) for extracting a uniform resource locator (URL) or hyperlink of at least one web page, and fetching a source file of multimedia content from the at least one web page based on the extracted URL or hyperlink. The controller 220 may be a processor that integrates a communication module connecting the electronic apparatus 200 to another apparatus, a network node, a web server, or an external data server, in a one-chip form. According to an embodiment, the communication module included in the controller 220 may receive a source file or metadata of multimedia content from at least one web page connected to the electronic apparatus 200, by using wired communication using a local area network (LAN), an unshielded twisted pair (UTP) cable, an optical cable, or a coaxial cable, or wireless communication using a wireless LAN, cellular communication, a device-to-device (D2D) network, Wi-Fi, Bluetooth, Bluetooth low energy (BLE), near field communication (NFC), or a radio frequency identification (RFID) network.

According to an embodiment, the controller 220 may generate a playlist that stores at least one multimedia content renderable on the browser media interface and sequentially renders the stored at least one multimedia content. According to an embodiment, the controller 220 may buffer data of the at least one multimedia content included in the playlist by using at least one buffering method from among serial buffering, parallel buffering, selected multimedia content buffering, and user selection-based buffering.

According to an embodiment, the controller 220 may generate a search region for accessing at least one web page, and searching for at least one multimedia content included in the at least one web page. According to an embodiment, the controller 220 may recommend related multimedia content based on a multimedia content search history of the user of the electronic apparatus 200.

According to an embodiment, the controller 220 may execute the browser media interface based on a user input.

Referring to FIG. 2, the display unit 230 may display, on the browser media content, at least one multimedia content determined by the controller 220. According to an embodiment, the display unit 230 may display the browser media interface overlapped on the web browser.

The display unit 230 may include at least one of, for example, a liquid crystal display (LCD), a thin-film transistor-liquid crystal display (TFT-LCD), an organic light-emitting diode (OLED), a flexible display, a 3-dimensional (3D) display, an electrophoretic display, and a quantum-dot display, but is not limited thereto. According to an embodiment, when the display unit 230 is configured as a touch screen by forming a layer structure with a touch pad, the display unit 230 may also be used as an input device as well as an output device.

According to an embodiment, the display unit 230 may display, in the browser media interface, a search region including at least one content found from the at least one web page. Also, the display unit 230 may display, in the browser media interface, a recommendation region for recommending multimedia content related to multimedia content viewed or found by the user.

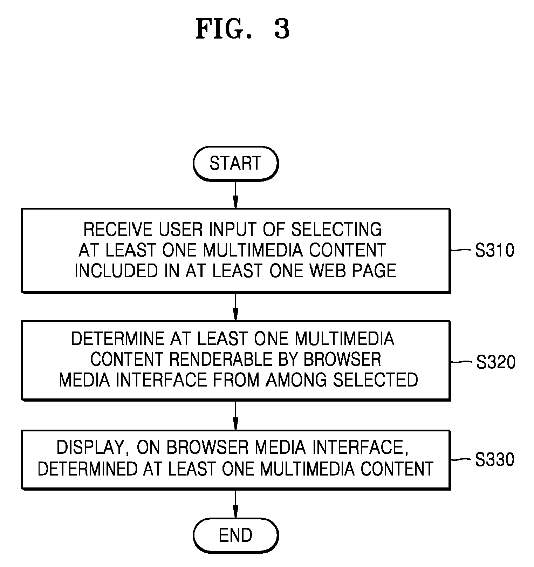

FIG. 3 is a flowchart of a method of displaying, by the electronic apparatus 200 (shown in FIG. 2), at least one multimedia content on a browser media interface, according to various embodiments of the present disclosure.

Referring to FIG.3, in operation S310 the electronic apparatus 200 receives a user input of selecting at least one multimedia content included in at least one webpage. According to an embodiment, the electronic apparatus 200 may access the at least one web page by extracting a URL or hyperlink of the at least one web page through a web browser, and extract a source file or metadata of the at least one multimedia content through the URL or hyperlink of the web page. According to an embodiment, the electronic apparatus 200 may receive at least one user input from among a touch input of touching a thumbnail image of at least one multimedia content or a predetermined region including the thumbnail image, a voice command of selecting at least one multimedia content, a gesture input of selecting at least one multimedia content, and a human-eye gesture input of selecting at least one multimedia content.

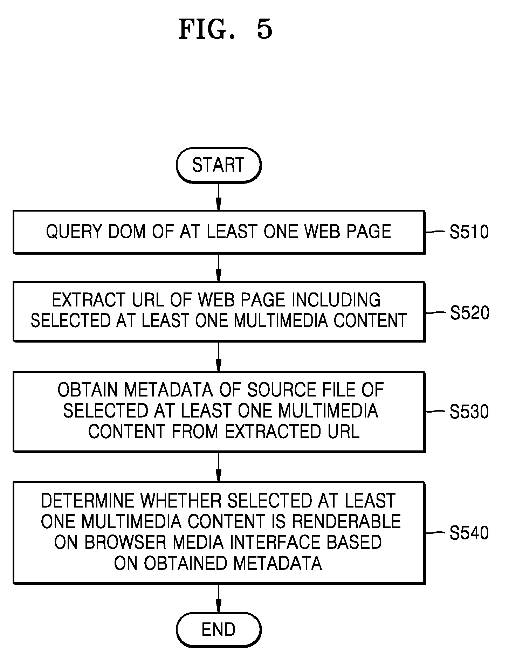

Referring to FIG. 3, in operation S320, the electronic apparatus 20 determines at least one multimedia content renderable by a browser media interface, from among the selected at least one multimedia content. According to an embodiment, the electronic apparatus 200 may display the browser media interface that integrates and plays at least one multimedia content on the web browser. According to an embodiment, the browser media interface may be displayed overlapped on the web browser. The electronic apparatus 200 may determine whether at least one media content is renderable in the web browser or is renderable on the browser media interface. Details about operation S320 will be described with reference to FIG. 5.

Referring to FIG. 3, in operation S330, the electronic apparatus 200 displays, on the browser media interface, the determined at least one multimedia content. According to an embodiment, the electronic apparatus 200 generate a playlist that stores the at least one multimedia content renderable on the browser media interface and sequentially plays the stored at least one multimedia content. According to an embodiment, the electronic apparatus 200 may pre-fetch data of the at least one multimedia content included in the playlist via parallel buffering.

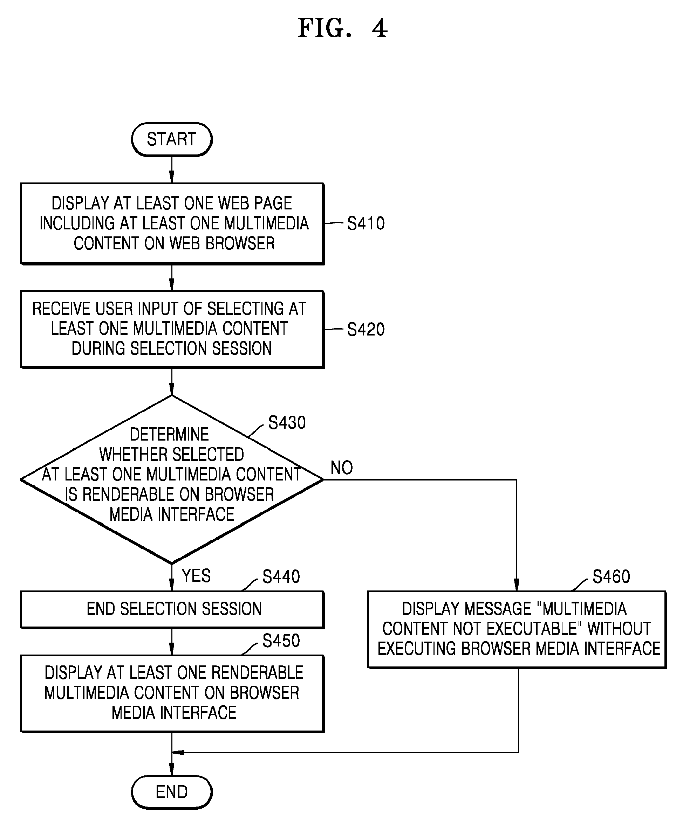

FIG. 4 is a flowchart of a method of displaying, by the electronic apparatus 200, at least one multimedia content on a browser media interface, according to various embodiments of the present disclosure.

Referring to FIG. 4, in operation S410 the electronic apparatus 200 (shown in FIG. 2) displays at least one web page including at least one multimedia content on a web browser. The web page is opened through a browser window by a user, and may correspond to a website including multimedia content, such as a video, an image, a flash work, or animation. According to an embodiment, the electronic apparatus 200 may display a thumbnail image according to a hypertext markup language (HTML) code of the at least one web page of the at least one multimedia content or may display a representative image of the at least one multimedia content in a web page opened through the web browser.

Referring to FIG. 4, in operation S420, the electronic apparatus 200 receives a user input of selecting at least one multimedia content during a selection session. The user may select one or more multimedia content from among the at least one multimedia content provided by the at least one web page opened in operation S410. According to an embodiment, the electronic apparatus 200 may change a layout of the webpage such that a selection interface (for example, a "+" sign) is displayed with respect to each thumbnail of the multimedia content so as to receive the user input. Accordingly, the electronic apparatus 200 may receive the user input through the thumbnail image or selection interface of each of multimedia content. For example, the user input of selecting the multimedia content may be received through an input of selecting a screen region including the thumbnail of the at least one multimedia content or an input of touching or dragging the thumbnail image of the at least one multimedia content.

According to an embodiment, the electronic apparatus 200 (shown in FIG. 2) may receive a voice command of the user selecting at least one multimedia content or a biometric input, such as a human-eye gesture input of the user.

The selection session may be a time period predetermined in the electronic apparatus 200 for receiving a user input. The selection session may be a time-based or event-based time period. When the selection session is time-based, the selection session may last for a predetermined time period or may continue as long as there is some user selection performed within a predetermined time interval. When the selection session is time-based, a time period may end upon receiving a user input selecting multimedia content.

Referring to FIG. 4, in operation S430, the electronic apparatus 200 determines whether at least one multimedia content selected based on the user input is renderable on the browser media interface. What is renderable may be widely interpreted, for example, whether multimedia content is renderable on a web browser or displayable on a browser media interface. For example, in the present specification, renderable may mean that multimedia content selected based on a user input is playable or executable, or corresponding multimedia content is renderable on a browser media interface executed after a user selected multimedia content.

Referring to FIG. 4, when it is determined that the selected at least one multimedia content is renderable on the browser media interface in operation S430, the electronic apparatus 200 ends the selection session in operation S440 after the predetermined time (time-based) or after the user input of selecting at least one multimedia content is received (event-based).

Referring to FIG. 4, in operation S450, the electronic apparatus 200 displays the renderable at least one multimedia content on the browser media interface. According to an embodiment, the electronic apparatus 200 may fetch a source file of the renderable at least one multimedia content from a main server via a query of a DOM-tree of the web page while metadata related to the renderable at least one multimedia content is extracted from an HTML code of the web page. According to an embodiment, the electronic apparatus 200 may receive, from a server, a file and thumbnail image of at least one multimedia content based on extraction of a corresponding URL from a DOM-tree.

The metadata of the multimedia content extracted from the web page may include detailed information of the multimedia content, for example, at least one of a size, resolution, and a category.

After fetching the metadata and the source file, the electronic apparatus 200 may display, on the browser media interface, the renderable at least one multimedia content. The electronic apparatus 200 may play the at least one multimedia content on the browser media interface.

According to another embodiment, instead of operation S450, the electronic apparatus 200 may execute the browser media interface immediately after operation S440, i.e., immediately after the selection session is ended. In this case, the electronic apparatus 200 may perform a fetching operation for a short period of time in order to fetch multimedia content from a server and load at least one multimedia content renderable on an executed browser media interface in a form of a playlist playable on a browser.

When it is determined that the at least one multimedia content selected based on the user input is not renderable on the browser media interface in operation S430, the electronic apparatus 200 may provide an alarm about an unrenderability alarm in operation S460. For example, the alarm may be provided in a form of a message, a popup window, vibration (in mobile device), or any other form as understood by one of ordinary skill in the art, for example, displaying a message "multimedia content not executable", as shown in FIG. 4. Accordingly, even if the user selects multimedia content that is not renderable, the selected multimedia content is not played on the browser media interface.

FIG. 5 is a flowchart of a method of determining, by the electronic apparatus 200, multimedia content renderable on a browser media interface, i.e., multimedia content renderable on the browser media interface, according to various embodiments of the present disclosure.

According to an embodiment, renderability on a browser media interface may denote playability or executability of multimedia content selected by a user, or a probability of multimedia content being playable on a web browser. Accordingly, criteria of determining renderability may be checking whether multimedia content selected by a user is actually usable in a server, and evaluating a parameter of the multimedia content to verify compatibility of the multimedia content in a browser media interface to be executed. The parameter of the multimedia content may include, for example, at least one of a size of a source file of the multimedia content, a file format, and a content notation in a HTML web page.

According to an embodiment, separately from renderability and executability in a browser media interface, there may be multimedia content that is not playable according to user-defined settings, such as restriction over playing censored content belonging to a particular category, restriction over playing multimedia content that requires parental guidance, and regulatory authority defined censorship.

According to an embodiment, renderability of multimedia content on a browser media interface may be determined based on a content notation of an HTML page. Generally, when multimedia content included in an HTML is downloaded from a server to a web browser, a parser parses the multimedia content, identifies tokens, forms a DOM, and sets attributes for each node. Various HTML tags may be present in the web page. For example, the HTML tags may be <img> and <video> tags, and a web browser engine may recognize which type of multimedia content is present in the web page. An image, a video, or another multimedia content may be present in the web page in a form of resources, and downloaded in the web browser separately.

A next operation of determining of the renderability based on the content notation is performed in consideration of an extension type of the downloaded resource, wherein extension may be used to determine whether a type of a detected image is PGN, JPEG, or another type. However, when a web developer may have accidentally or intentionally typed a wrong image type that may lead to false interpretations by the browser about a file type. Accordingly, a stable and safe method may be detecting an image through a file signature. A source file of multimedia content, which is in a form of bytes or byte data, may include a signature that is an array of unique bytes or byte identifier used by a media player to identify Multipurpose Internet Mail Extensions (MIME). For example, the source file may include a following signature.
89 50 4E 47 0D 0A 1A 0A Hex Signature for PNG format
52 49 46 46 nn nn nn nn 57 41 56 45 hex signature for wav format
FF D8 FF E0 hex signature for jpg or jpeg

Similarly, there is a unique signature for different file types that enable an operating system (OS) to decide which application is to be used to open a certain file. When the web browser downloads a resource, data arrives at the web browser in bytes or byte format and may be easily interpreted by the web browser to identify a type of a source file of downloaded multimedia content. When a file type of the downloaded resource does not match a file type supported by the web browser, the web browser may be configured to stop downloading the resource further, thereby saving unnecessary download of data.

Accordingly, all types of source files of multimedia content identified to be playable or executable by a web browser may be rendered on a browser media interface.

A method of determining multimedia content renderable on a browser media interface from among multimedia content selected by a user may be performed as follows.

Referring to FIG. 5, in operation S510, the electronic apparatus 200 (shown in FIG, 2) queries a DOM of at least one webpage. According to an embodiment, the electronic apparatus 200 may parse the DOM and receive a hyperlink from a DOM-tree. In this case, the hyperlink is not a hyperlink of a current web page where multimedia content is being rendered, but a hyperlink of a web page where the multimedia content exists.

Referring to FIG. 5, in operation S520, the electronic apparatus 200 extracts an URL of a web page including at least one multimedia content selected by a user.

Referring to FIG. 5, in operation S530, the electronic apparatus 200 obtains metadata of a source file of each of the selected at least one multimedia content from the extracted URL. According to an embodiment, the electronic apparatus 200 may include at least one of a file size of the source file, a file format of the source file, resolution of the source file, and a genre of the multimedia content from among a category of the multimedia content.

Referring to FIG. 5, in operation S540, the electronic apparatus 200 determines whether the at least one multimedia content is renderable on the browser media interface based on the obtained metadata. According to an embodiment, in order to find characteristics or attributes related to the selected at least one multimedia content, the electronic apparatus 200 may query a DOM-tree structure of a web page opened in a web browser, and determine playability of multimedia content in consideration of criteria of renderability, for example, accessibility with respect to a main server where the multimedia content is stored, compatibility of a file format with a browser media interface, a renderable size of a source file (MB or GB), quality (high-definition (HD) or non-HD) of the source file, and file resolution, or in consideration of rendering settings of the electronic apparatus 200, for example, restrictions defined by parents or regulation authorities.

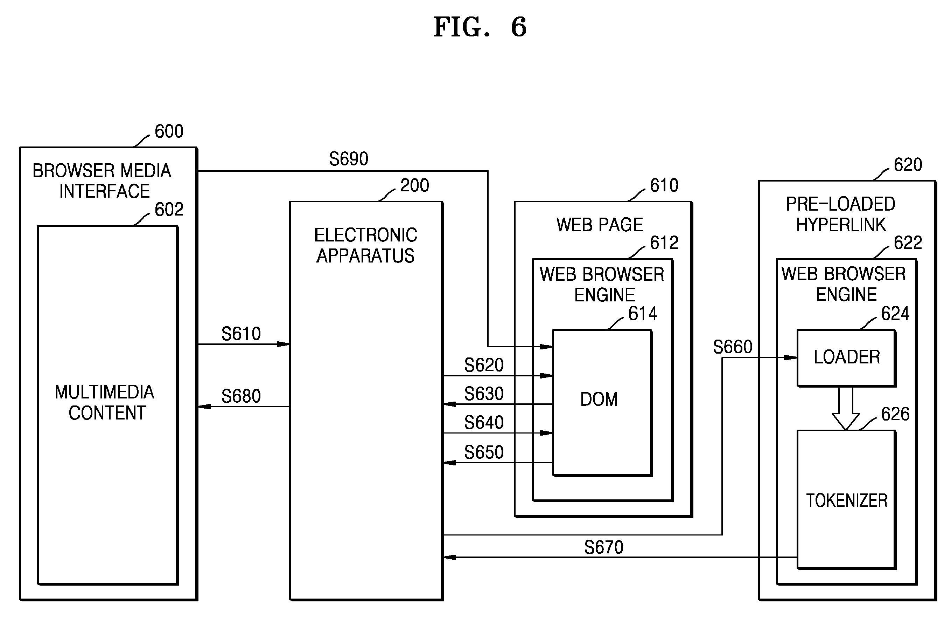

FIG. 6 is a flowchart of a method of loading, by the electronic apparatus 200, multimedia content from a website, according to various embodiments of the present disclosure.

Referring to FIG. 6, a method of fetching, by the electronic apparatus 200, multimedia content 602 renderable on a browser media interface 600 from a main host server and a method of loading a web browser and a web page 610 corresponding to the web browser into the browser media interface 600 through a web browser engine 612 rendered by a tree structure of a document object model or DOM 614. The method described with reference to FIG. 6 may be performed via interaction between three components, i.e., the electronic apparatus 200, the browser media interface 600, and web browser engines 612 and 622.

Referring to FIG. 6, in operation S610, the browser media interface 600 transmits a request signal for the multimedia content 602 to the electronic apparatus 200. According to an embodiment, the browser media interface 600 may be activated based on a user input of selecting the multimedia content 602 (refer to flowchart of FIG. 3). According to an embodiment, the user input of selecting the multimedia content 602 may be received from a server capable of receiving the multimedia content 602 or the web page 610 including a source file of the multimedia content 602.

Referring to FIG. 6, in operation S620, the electronic apparatus 200 transmits the request signal received from the browser media interface 600 to the web browser engine 612 included in the web page 610. According to an embodiment, the multimedia content 602 may be selected from the web page 610 rendered in the web browser. Then, the electronic apparatus 200, instead of the browser media interface 600, may transmit a request signal for receiving the multimedia content 602 from the web page 610 to the web browser engine 612. Also, the request signal received from the electronic apparatus 200 may be made in context of the renderable multimedia content 602 related to the web page 610.

Referring to FIG. 6, in operation S630, in response to the request signal received from the electronic apparatus 200, the web browser engine 612 may query the tree structure of the DOM 614, and reveal the tree structure of the DOM 614 to the electronic apparatus 200. According to an embodiment, the electronic apparatus 200 parses the tree structure of the DOM 614, and search for a tag or node of the multimedia content 602, for example, a video node. When the tag or node of the multimedia content 602 is searched for in the tree structure of the DOM 614, the electronic apparatus 200 may receive multimedia content information from the DOM 614 and access data related to the multimedia content 602. The multimedia content information may be, for example, a web page address of the multimedia content 602 residing in a main server.

According to an embodiment, the electronic apparatus 200 may receive attributes related to the multimedia content 602 from the tree structure of the DOM 614, for example, a thumbnail image, resolution, a location on the browser media interface 600, and metadata.

Referring to FIG. 6, in operations S640 and S650, the electronic apparatus 200 may request the tree structure of the DOM 614 of the web browser engine 612 for a hyperlink 620, and receive the hyperlink 620 from the DOM 614. The hyperlink 620 received in operation S650 may a hyperlink indicating the multimedia content 602 in a web page other than the current web page 610. The hyperlink 620 may be present in the web page 610 that is currently rendered and contains information related to the multimedia content 602. According to an embodiment, the electronic apparatus 200 fetches the multimedia content 602 corresponding to the hyperlink 620 by accessing a tree structure of a DOM of the other web page referenced by the hyperlink 620.

Referring to FIG. 6, in operation S660, the electronic apparatus 200 transmits, to a loader 624 of the web browser engine 622, a request signal for executing a web page by referencing the pre-loaded hyperlink 620. The loader 624 may receive data of the multimedia content 602 from the server based on the request signal received by the web browser engine 622. A tokenizer 626 may generate a DOM different from the DOM 614 included in the web page 610 during runtime by using received data.

Referring to FIG. 6, in operation S670, the electronic apparatus 200 parses a DOM tree generated by the web browser engine 622 in order to receive a source file and metadata of the multimedia content 602 included in the hyperlink 620 pre-loaded from the main server.

Referring to FIG. 6, in operation S680, the electronic apparatus 200 loads the multimedia content 602 based on the received source file and metadata, and displays the loaded multimedia content 602 on the browser media interface 600.

Referring to FIG. 6, in operation S690, the browser media interface 600 maintains a link with the DOM 614 such that manipulation by the user is possible through the browser media interface 600. For example, the browser media interface 600 receives all events, i.e., user inputs, with respect to the multimedia content 602 displayed on the browser media interface 600 so as to display control operations, such as play, pause, and stop, regarding the multimedia content 602. According to an embodiment, when the browser media interface 600 receives a user input of playing a video, an event according to the user input is transmitted to the web browser engine 612 through an event listener, and the web browser engine 612 may start to play the video.

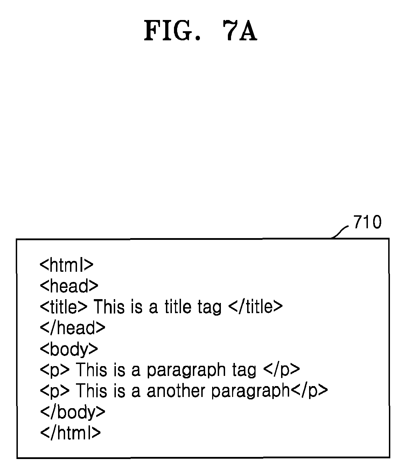

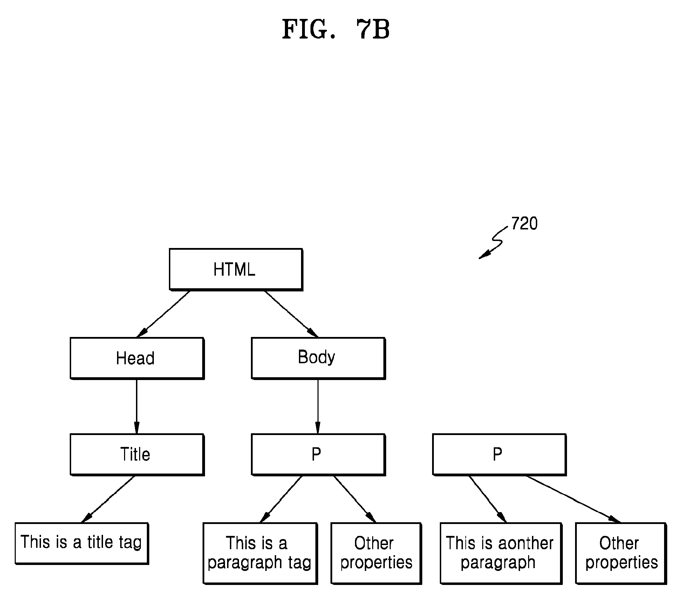

FIG. 7A illustrates an example of an HTML code 710 of a web page, and FIG. 7B is a diagram illustrating an example of a structure of a DOM 720 of the web page for describing functions of a web browser engine regarding rendering of the web page according to various embodiments of the present disclosure.

The HTML code 710 and the structure of the DOM 720 of FIGS. 7A and 7B have been described in detail with reference to operation S630 shown in FIG. 6. Thus, details repeating those of operation S630 of FIG. 6 will be omitted.

As an example, when a user inputs an address of a website on an address window of a web browser, the web browser transmits a request of the user to a web server on the Internet. The web server transmits a response regarding a user input of requesting for multimedia content to the web browser. A web page stores information in a form of a DOM tree, and a DOM may have a data structure form of HTML content in the web page.

As an example, when the web browser receives the response from the web server, a web browser engine included in the web browser breaks the multimedia content into tokens of data, thereby breaking the received response. According to an embodiment, breaking of the multimedia content may be performed by a tokenizer included in the web browser engine. The tokens of data are transmitted to a tree-builder forming the DOM. The DOM includes individual nodes for different elements in the web page, and each of multimedia content may have an individual node in the DOM. The web page may include the HTML code 710 shown in FIG. 7A.

Referring to FIG. 7A, each tag included in the HTML code 710 may form an individual node of a DOM. The HTML code 710 is also illustrated in the DOM 720 of FIG. 7B. Each node of the DOM 720 may include information about characteristics of each of multimedia content. According to an embodiment, until a new user input is received, the web browser engine may store information of the DOM 720. When a user input is received, the user input may be transmitted to the electronic apparatus 200 that queries the DOM 720 and fetches multimedia content.

For example, the electronic apparatus 200 (shown in FIG. 6) may transmit a multimedia content request to the web browser engine and may be connected to the DOM 720. Then, the electronic apparatus 200 may parse a structure of the DOM 720 and search for multimedia content based on a relevant tag or node. When the multimedia content is identified, the electronic apparatus 200 may receive information about the multimedia content from the DOM 720. Information related to the multimedia content present in the DOM 720 of the web page may include at least one of a thumbnail image, a URL, resolution of a file, a location in the web page, and metadata.

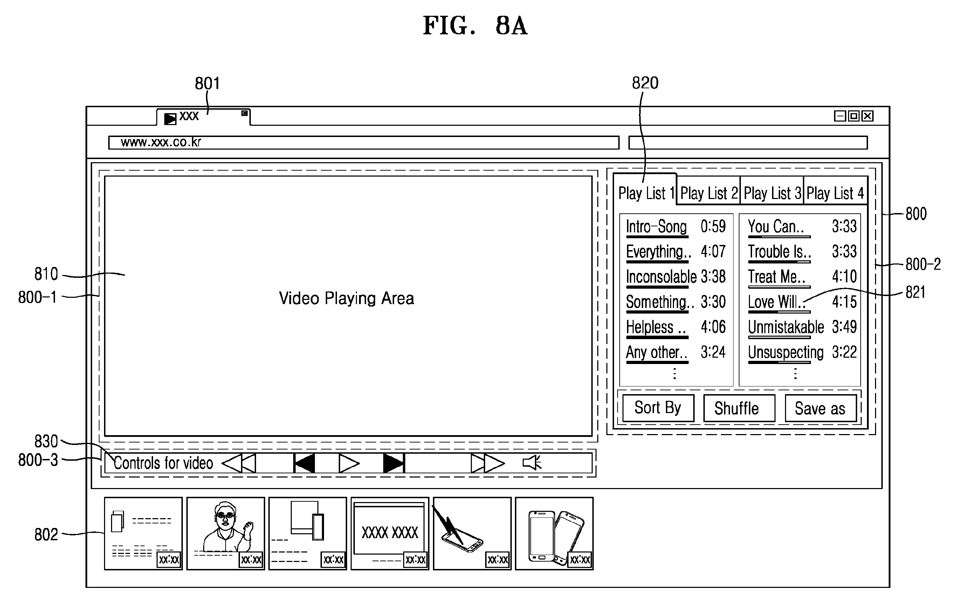

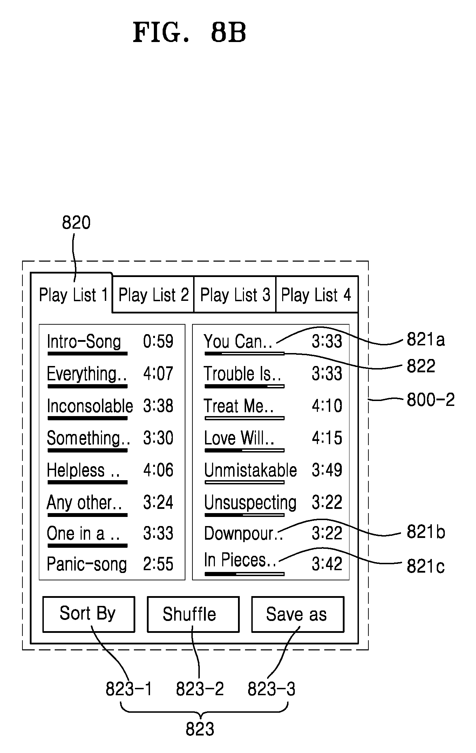

FIG. 8A illustrates a browser media interface 800 provided by the electronic apparatus 200 and FIG. 8B illustrates a playlist 820 displayed on the browser media interface 800, according to various embodiments of the present disclosure.

Referring to FIG. 8A, a web browser 801 includes at least one multimedia content 802, and the browser media interface 800 may be displayed overlapped on the web browser 801. According to an embodiment, the browser media interface 800 may include the playlist 820 that integrally plays at least one multimedia content 821.

According to an embodiment, with reference to FIG. 8A, the electronic apparatus 200 (shown in FIG. 6) may display a playing region 810 in a first region 800-1 of the browser media interface 800, display the playlist 820 in a second region 800-2, and display a control region 830 for controlling playing of multimedia content in a third region 800-3.

In the playing region 820, multimedia content selected by a user or included in the playlist 820 may be played. The multimedia content played in the playing region 810 may include at least one of, for example, an image, audio, a video, and a flash work.

The playlist 820 may include the multimedia content 821 rendered by the web browser 801 or renderable on the browser media interface 800. According to an embodiment, the multimedia content 821 included in the playlist 820 may be multimedia content selected through a user input or multimedia content automatically stored from among multimedia content playable on the browser media interface 800. According to an embodiment, the multimedia content 821 included in the playlist 820 may be arranged in an order according to alphabets, user preferences, the number of playing times, or a recent playing history.

The playlist 820 may be stored in the browser media interface 800. According to an embodiment, the playlist 820 may be stored in a form of a following structure.
PlaylistObject
{
List VideoURL
List TBURL //thumbnail url
List Additional Info
Last viewed position
Player sound
ID
isViewed
}

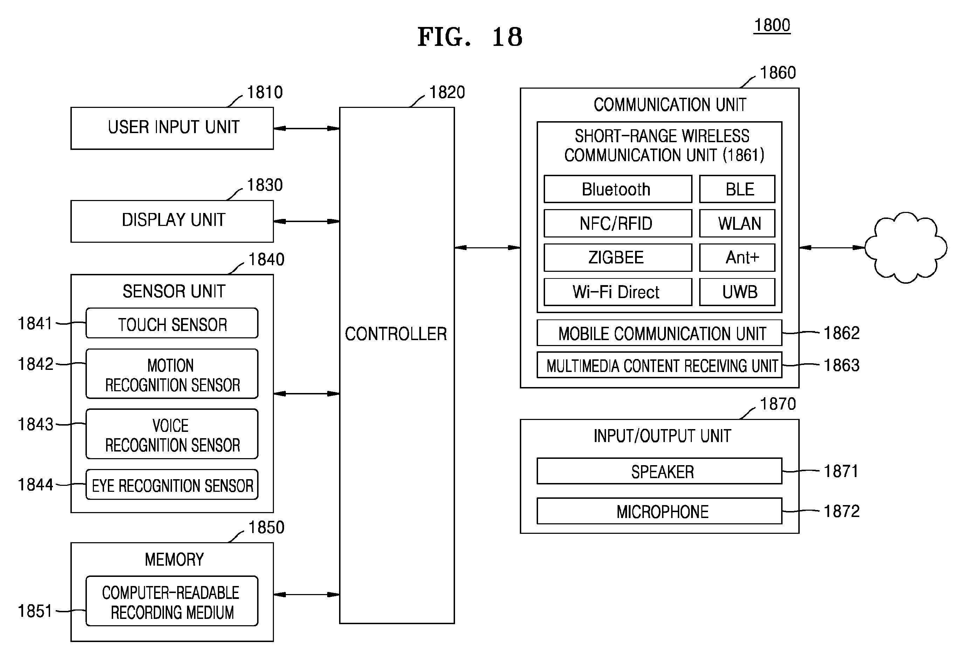

However, the playlist 820 (shown in FIG. 8A) is not limited thereto, and may be stored in a memory (for example, a memory 1850 shown in FIG. 18) of the electronic apparatus 200.

According to an embodiment, a recently viewed location of the multimedia content 821 may be periodically updated and stored in the playlist 820. Accordingly, even when the electronic apparatus 200 (shown in FIG. 6) executing and controlling the browser media interface 800 is suddenly ended, the browser media interface 800 may fetch stored information during a resuming operation, and start playing recently viewed multimedia content from a recently viewed location.

According to an embodiment, the browser media interface 800 may provide a playlist suggested based on at least one of the stored playlist 820, user preference, multimedia content search history of the user, and a user profile.

According to an embodiment, while rendering the multimedia content 821 included in the playlist 820, the electronic apparatus 200 extracts detailed information related to the multimedia content 821 from an HTML code of a web page. The detailed information may include at least one of, for example, a URL including the multimedia content 821, metadata, a file size of the multimedia content 821, file resolution, and a genre of the multimedia content 821. The extracting of the detailed information provides the playlist 820 in the browser media interface 800 such that the playlist 820 matches a display style or method of the web page, thereby providing convenience of searching the multimedia content 821 in the browser media interface 800.

Referring to FIG. 8A, a user interface for the user to control playing operations of the multimedia content 821 included in the playlist 820 may be displayed in the control region 830. According to an embodiment, the control region 830 may display a user interface including play, rewind, forward, pause, and stop of multimedia content.

Referring to FIG. 8B, the playlist 820 of FIG. 8A may include at least one multimedia content, i.e., multimedia content 821 a through 821 c, and a user interface 823 for receiving a control input of the user related to arrangement and playing of the multimedia content 821 a through 821 c.

According to an embodiment, there may be a plurality of the playlists 820. The playlist 820 may include the multimedia content 821a, 821b, and 821c that are represented in titles or subtitles. The multimedia content 821 a, 821b, and 821 c included in the playlist 820 may be displayed in a form of metadata corresponding to the multimedia content 821 a, 821 b, and 821 c, wherein the metadata includes at least one of a label (for example, a song title or a movie title), a file size, a file format, a total playing time, and an artist name. According to an embodiment, a thumbnail corresponding to each of the multimedia content 821 a, 821 b, and 821 c may be displayed on the playlist 820.

With reference to FIG. 8B, data of the multimedia content 821a, 821b, and 821 c included in the playlist 820 may be buffered through the browser media interface 800 from a main server. Also, the browser media interface 800 may display a buffering status of the multimedia content 821 a in the playlist 820, for example, a buffering degree 822 displayed in real-time in a percentage. According to an embodiment, the buffering degree 822 of the multimedia content 821 a included in the playlist 820 may be displayed through a bar graph or a pie-chart. According to an embodiment, the browser media interface 800 may not display the buffering degree 822 of all of the multimedia content 821 a through 821 c in the playlist 820, but may display only the buffering degree 822 of the multimedia content 821 a selected by the user and not display a buffering degree 822 of the multimedia content 821b and 821c that are not selected by the user.

According to an embodiment, the electronic apparatus 200 (shown in FIG. 6) may buffer, through the browser media interface 800, the data of the multimedia content 821 a through 821 c included in the playlist 820 through at least one buffering method from among serial buffering, parallel buffering, selected media content buffering, and user selection-based buffering. The parallel buffering means that all of the multimedia content 821 a through 821 c included in the playlist 820 are simultaneously buffered and the serial buffering means that all of the multimedia content 821 a through 821 c included in the playlist 820 are sequentially buffered. According to an embodiment, the electronic apparatus 200 may buffer only the multimedia content 821 a selected by the user. According to an embodiment, the serial buffering or the parallel buffering of all of the multimedia content 821 a through 821 c included in the playlist 820 may automatically begin.

According to another embodiment, the electronic apparatus 200 (shown in FIG. 6) may receive a user input of directing selective buffering of the multimedia content 821 in the playlist 820, and buffer the multimedia content 821 a in the background while the user is viewing the multimedia content 821 c. According to an embodiment, the electronic apparatus 200 may buffer the multimedia content 821 a through 821 c in the background based on at least one of preference of the user, a user profile, and a multimedia content search history of the user.

According to an embodiment, with reference to FIG. 8B, the selective buffering may be performed based on a pre-combined weight of the multimedia content 821a through 821c in the playlist 820. The weight may be based on a popularity index related to the multimedia content 821. In this case, buffering may be performed in a descending order of popularity indexes of the multimedia content 821 a through 821c in the playlist 820.

Referring to FIG. 8B, the playlist 820 may include the user interface 823 for receiving a user input of aligning an arrangement order of the multimedia content 821a through 821c in the playlist 820. The user interface 823 may include a user-defined alignment 823-1 for determining an arrangement order of the multimedia content 821a through 821c according to a user input, and a shuffle alignment 823-2 for arbitrarily determining the arrangement order. Also, the user interface 823 may include a storage interface 823-3 for storing an order of the aligned multimedia content 821a through 823c.

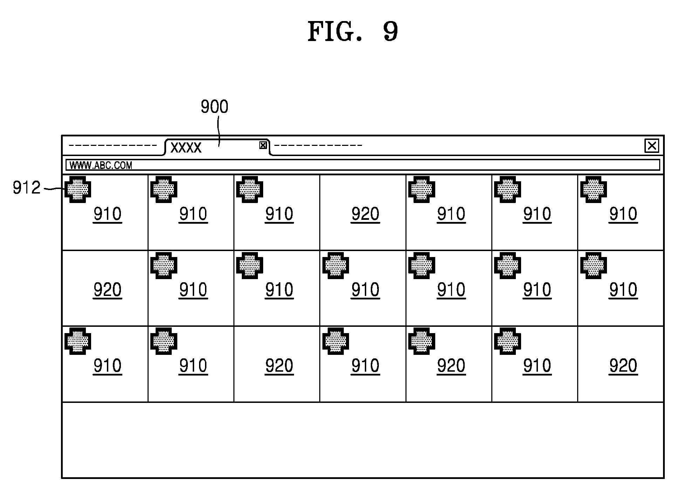

FIG. 9 is a diagram for describing a method of adding, by the electronic apparatus 200, multimedia content through a browser media interface, according to various embodiments of the present disclosure.

Referring to FIG. 9, a plurality of multimedia contents, i.e., first and second multimedia content 910 and 920, may be displayed on a web browser 900. The plurality of multimedia contents may include the first multimedia content 910 renderable by the browser media interface 800 (refer to FIG. 8) and the second multimedia content 920 not renderable by the browser media interface 800. The meaning of being renderable by the browser media interface 800 has been described above with reference to FIGS. 3 through 5, and thus repeating descriptions are omitted here.

An add interface 912 (shown in FIG. 9) may be added, as a user interface, on the first multimedia content 910 renderable by the browser media interface 800. The displaying of the add interface 912 may be performed by changing a tree structure of a DOM of a web page by adding a following code indicating the first multimedia content 910.

Element.innerHTML+="<inlg src='(path of + sign)' />"

The electronic apparatus 200 (shown in FIG. 6) may request a web browser engine to display the add interface 912 on a thumbnail image of the first multimedia content 910 in the web page including the first multimedia content 910. The web browser engine may change attributes of the first multimedia content 910 and insert, as a selection interface, the add interface 912 into an HTML. When a user input of selecting the add interface 912 is received, the electronic apparatus 200 may play multimedia content selected from the first multimedia content 910 on the browser media interface 800 or add the selected multimedia content to the playlist 820.

According to the embodiment shown in FIG. 9, the electronic apparatus 200 displays the first multimedia content 910 renderable by the browser media interface 800 and the second multimedia content 920 not renderable by the browser media interface 800 together on the web browser 900 and displays the add interface 912 on the first multimedia content 910, thereby providing intuitive user experience (UX for the user to conveniently view multimedia content.

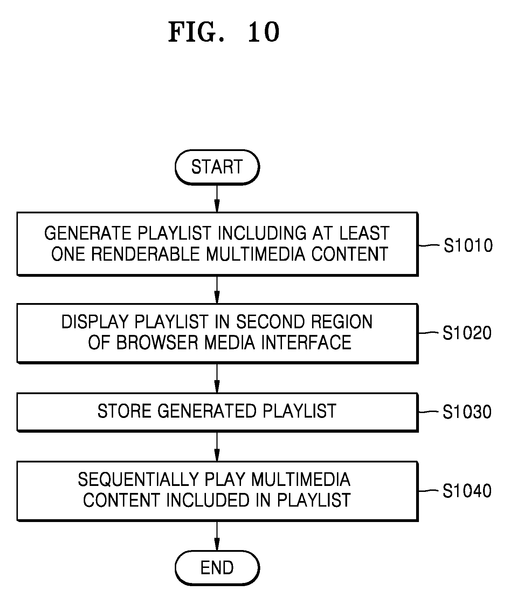

FIG. 10 is a flowchart of a method of generating and storing, by the electronic apparatus 200 (shown in FIG. 6), a playlist through a browser media interface, according to various embodiments of the present disclosure.

Referring to FIG. 10, in operation S 1 O 10, the electronic apparatus 200 generates a playlist including at least one multimedia content renderable on a browser media interface. According to an embodiment, the electronic apparatus 200 may add multimedia content rendered by a web browser to the playlist, in addition to the multimedia content renderable on the browser media interface. According to an embodiment, the electronic apparatus 200 may add, to the playlist, multimedia content automatically stored from among multimedia content selected based on a user input or multimedia content renderable on the browser media interface.

Referring to FIG. 10, in operation S1020, the electronic apparatus 200 displays the playlist in a second region of the browser media interface. According to an embodiment, the electronic apparatus 200 may display multimedia content selected by a user in a first region of the browser media interface, and display the playlist generated in operation S1010 in the second region of the browser media interface.

Referring to FIG. 10, in operation S1030, the electronic apparatus 200 stores the generated playlist. According to an embodiment, the playlist may be stored, on the browser media interface, based on a web or stored in a memory included in the electronic apparatus 200. According to an embodiment, the electronic apparatus 200 may arrange multimedia content included in the playlist in an order according to alphabets, user preferences, the number of playing times, or a recent playing history. The electronic apparatus 200 may store not only the multimedia content included in the playlist, but also an arrangement order of the multimedia content and a recently viewed location of each of multimedia content.

Referring to FIG. 10, in operation S1040, the electronic apparatus 200 sequentially plays the multimedia content included in the playlist. According to an embodiment, the electronic apparatus 200 may not only play the multimedia content sequentially, but also play the multimedia content according to a user input or in an arbitrary order.

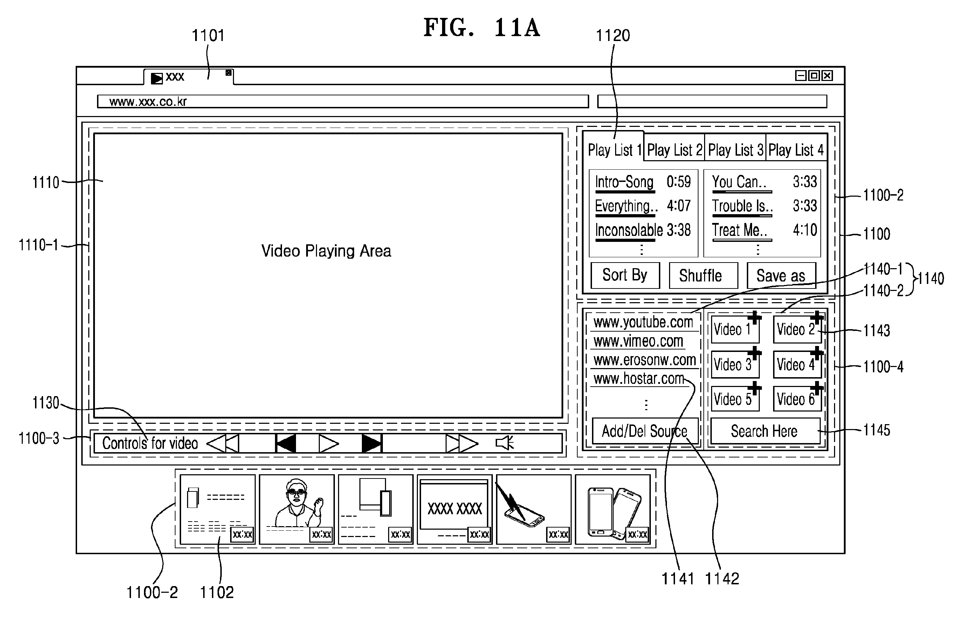

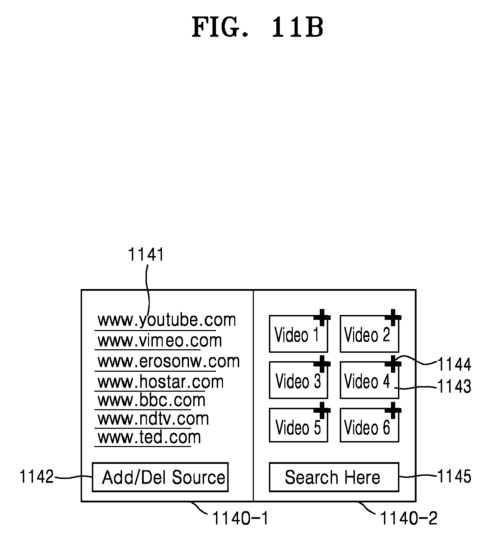

FIG. 11A is a diagram for describing a method of displaying, by the electronic apparatus 200, a search region 1140 of multimedia content on a browser media interface 1100 and FIG. 11B is a diagram for describing a method of adding multimedia content 1143 found on the browser media interface 1100 to a playlist 1120 according to various embodiments of the present disclosure.

Referring to FIG. 11A, a web browser 1101 includes at least one multimedia content 1102, and the browser media interface 1100 may be displayed overlapped on the web browser 1101. Since a playing region 1110, the playlist 1120, and a control region 1130 shown in FIG. 11A are the same as the rendering region 810, the playlist 820, and the control region 830 shown in FIG. 8A, details thereof will not be provided again here.

The electronic apparatus 200 (shown in FIG. 6) may display the playing region 1110 in a first region 1100-1 of the browser media interface 1100, display the playlist 1120 in a second region 1100-2, display the control region 1130 in a third region 1100-3, and display the search region 1140 in a fourth region 1100-4.

Referring to FIG. 11B, the search region 1140 may include a source display region 1140-1 for receiving multimedia content based on at least one web, such as a web page address, and a content search region 1140-2 for displaying multimedia content found from the web page address.

Referring to FIG. 11B, web pages 1141 for receiving a source file of multimedia content renderable on the browser media interface 1100 may be displayed in the source display region 1140-1. Also, a user interface 1142 for receiving a user input of adding/deleting a source including the web pages 1141 may be displayed in the source display region 1140-1. The user interface 1142 is provided to add a new web page address or to receive a user input of deleting an address of the web page 1141.

A thumbnail image of the multimedia content 1143 found from the web pages 1141 may be displayed in the content search region 1140-2. An add interface 1144 may be displayed on the thumbnail image of the multimedia content 1143. When a user input of selecting the multimedia content 1143 is received through the add interface 1144, the electronic apparatus 200 may play the multimedia content 1143 in the playing region 1110 or add the multimedia content 1143 to the playlist 1120. The displaying of the add interface 1144 may be performed by changing a tree structure of a DOM of a web page by adding an HTML code to the multimedia content 1143. Since a method of displaying the add interface 1144 is the same as that of the add interface 912 shown in FIG. 8B, repetitive descriptions thereof are omitted.

Referring to FIG. 11B, a user interface 1145 for receiving a user input of searching for multimedia content based on text input through a text box or the like may be displayed in the content search region 1140-2. According to an embodiment, the electronic apparatus 200 may search for multimedia content by receiving an address of a web page accessible through the Internet based on a search word received through the user interface 1145 or by using a search engine (for example, Google® or Yahoo®).

According to an embodiment, the electronic apparatus 200 (shown in FIG. 6) may not only search for web-based multimedia content, but may also search for multimedia content stored in a memory included in the electronic apparatus 200. The memory may be a hard disk drive (HDD) of a PC or an external memory card. Details about the memory will be described in detail later with reference to the memory 1850 shown in FIG. 18.

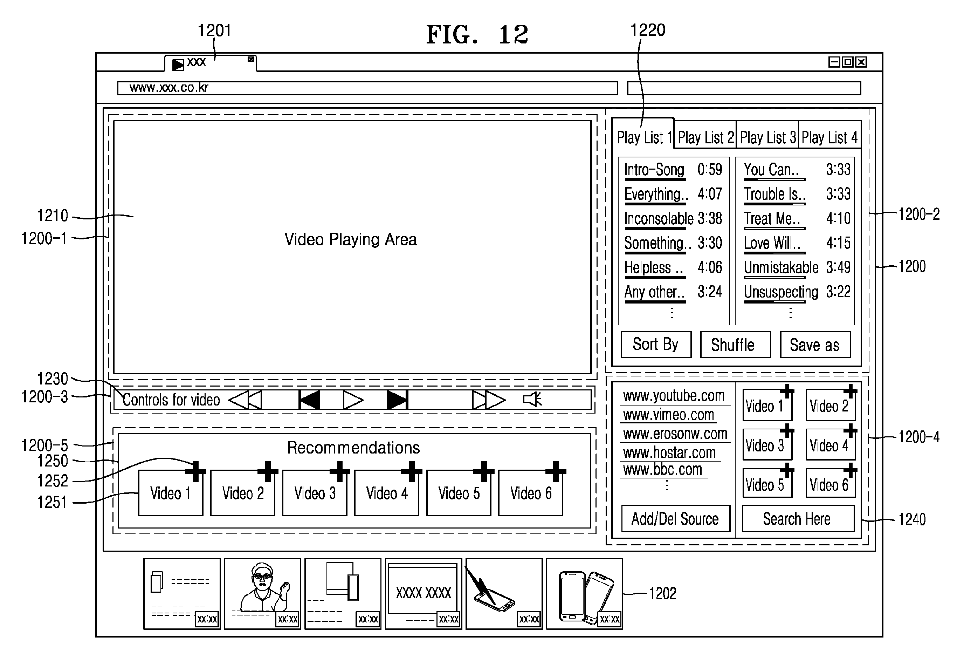

FIG. 12 is a diagram for describing a method of generating and displaying, by the electronic apparatus 200, a recommendation region 1250 of multimedia content on a browser media interface 1200, according to various embodiments of the present disclosure.

Referring to FIG. 12, a web browser 1201 includes at least one multimedia content 1202, and the browser media interface 1200 may be displayed overlapped on the web browser 1201. Since a playing region 1210, a playlist 1220, and a control region 1230 shown in FIG. 12 are the same as the playing region 810, the playlist 820, and the control region 830 shown in FIG. 8A, and a search region 1240 is the same as the search region 1140 shown in FIG. 11A, details thereof will be omitted.

Referring to FIG. 12, the electronic apparatus 200 (shown in FIG. 6) displays the playing region 1210 in a first region 1200-1 of the browser media interface 1200, the playlist 1220 in a second region 1200-2, the control region 1230 in a third region 1200-3, the search region 1240 in a fourth region 1200-4, and the recommendation region 1250 in a fifth region 1200-5.

The electronic apparatus 200 may display, in the recommendation region 1250, multimedia content 1251 recommended based on at least one of the playlist 1220 generated by a user, a user profile, a user setting, and a browsing history of the user. According to an embodiment, the electronic apparatus 200 may recommend related multimedia content based on at least one of metadata of multimedia content included in the playlist 1220 generated by the user (for example, a size of a source file of multimedia content, a file format, and file resolution), genre of the multimedia content (for example, a video, music, or a photograph), and a category of the multimedia content (for example, sports, movies, or musicals). According to another embodiment, the electronic apparatus 200 may recommend related multimedia content based on pages browsed frequently by the user or multimedia content searched frequently by the user. The multimedia content 1251 displayed in the recommendation region 1250 may be displayed in a thumbnail image.

According to an embodiment, with reference to FIG. 12, an add interface 1252 may be displayed on the thumbnail image of the multimedia content 1251 displayed in the recommendation region 1250. The electronic apparatus 200 may receive a user input of selecting the multimedia content 1251 recommended through the add interface 1252. Upon receiving the user input, the electronic apparatus 200 may play the multimedia content 1251 in the playing region 1210 or add the multimedia content 1251 to the playlist 1220. Since a method of displaying the add interface 1252 is the same as that of the add interface 912 shown in FIG. 9, repeating details thereof will not be provided again here.

According to the embodiment of FIG. 12, the electronic apparatus 200 may provide intuitive and user-friendly user experience (UX) to the user by recommending multimedia content related to multimedia content viewed by the user from among multimedia content distributed in different web pages, through the browser media interface 1200.

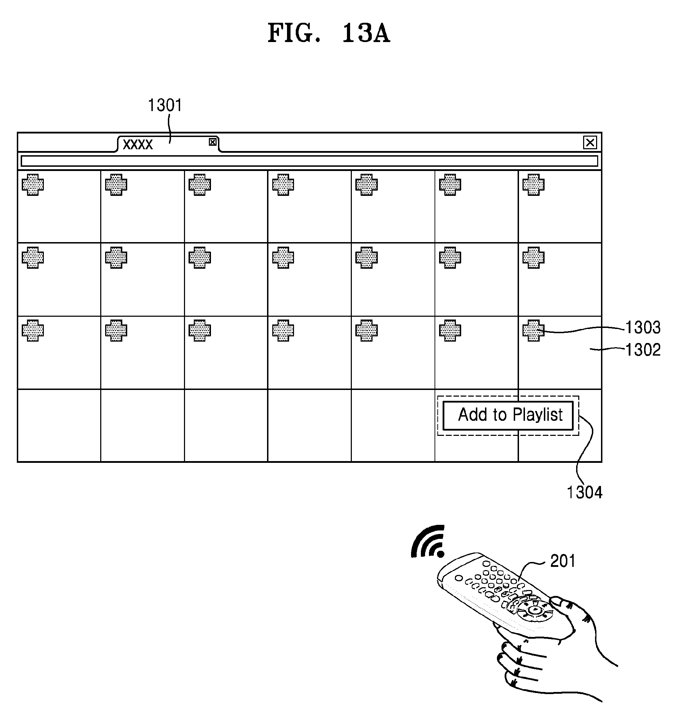

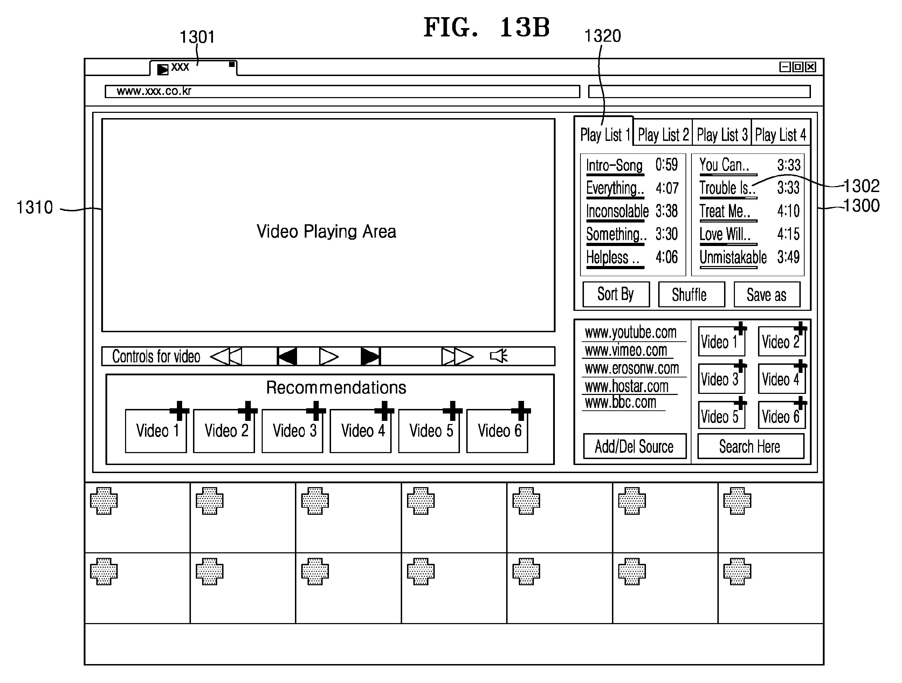

FIG. 13A is a diagram for describing a method of receiving, by the electronic apparatus 200, a user input of selecting multimedia content 1302 displayed on a web browser 1301 and FIG. 13B is a diagram for describing a method of adding the multimedia content 1302 selected based on the user input to a playlist 1320 of a browser media interface 1300 according to various embodiments of the present disclosure.

Referring to FIG. 13A, at least one multimedia content 1302 included in a web page is displayed through the web browser 1301. According to an embodiment, the electronic apparatus 200 may recognize the at least one multimedia content 1302 renderable by the web browser 1301. According to an embodiment, the electronic apparatus 200 may display a thumbnail image of the recognized at least one multimedia content 1302 on the web browser 1301.

Referring to FIG. 13A, an add interface 1303 may be displayed on the thumbnail image of the multimedia content 1302. When a user input of selecting the multimedia content 1302 is received through the add interface 1303, the electronic apparatus 200 may play the selected multimedia content 1302 in a playing region 1310 or add the selected multimedia content 1302 to the playlist 1320.

Referring to FIG. 13A, a playlist add interface 1304 for adding selected multimedia content to a playlist may be displayed on the web browser 1301. When the user selects the playlist add interface 1304 after selecting at least one of the multimedia content 1302 displayed on the web browser 1301 through a remote control apparatus 201, the electronic apparatus 200 may add the multimedia content 1302 selected based on the user input to the playlist 1320 shown in FIG. 13B.

Referring to FIG. 13B, the electronic apparatus 200 (shown in FIG. 6) may execute the browser media interface 1300 and display the browser media interface 1300 overlapped on the web browser 1301. According to an embodiment, the electronic apparatus 200 may determine whether the multimedia content 1302 selected based on the user input from among multimedia content recognized through the web browser 1301 is renderable on the browser media interface 1300. The multimedia content 1302 that is determined to be renderable may be played in the playing region 1310 or added to the playlist 1320.

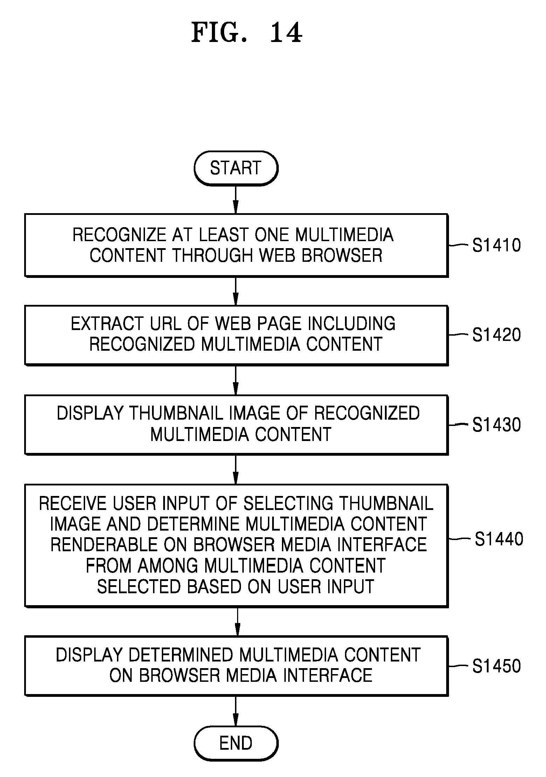

FIG. 14 is a flowchart of a method of displaying, by the electronic apparatus 200, at least one multimedia content included in at least one web page on a browser media interface, according to various embodiments of the present disclosure.

Referring to FIG. 14, in operation S1410 the electronic apparatus 200 recognizes at least one multimedia content through a web browser. According to an embodiment, the multimedia content recognized through the web browser may be at least one of an image, audio, a video, and a flash work.

Referring to FIG. 14, in operation S1420, the electronic apparatus 200 extracts a URL of a web page including the recognized multimedia content. According to an embodiment, the electronic apparatus 200 may parse a DOM tree of the web page including the recognized multimedia content, and extract the URL of the web page.

Referring to FIG. 14, in operation S1430, the electronic apparatus 200 displays a thumbnail image of the recognized multimedia content. According to an embodiment, the electronic apparatus 200 may receive the thumbnail image and metadata of the recognized multimedia content from a DOC of the web page including the recognized multimedia content through the extracted URL of the web page.

Referring to FIG. 14, in operation S1440, the electronic apparatus 200 receives a user input of selecting the thumbnail image, and determines multimedia content renderable on a browser media interface from among multimedia content selected based on the user input. Since a method of determining multimedia content renderable on a browser media interface has been described above with reference to FIGS. 3 through 5, details thereof will not be provided again here.

Referring to FIG. 14, in operation S1450, the electronic apparatus 200 displays the determined multimedia content on the browser media interface. According to an embodiment, the electronic apparatus 200 may store the determined multimedia content in a playlist or play multimedia content stored in the playlist sequentially or in an arbitrary order.

In the embodiments shown in FIGS. 13A, 13B, and 14, the electronic apparatus 200 (shown in FIG. 6) may provide user-friendly and intuitive user experience (UX) by automatically recognizing at least one multimedia content through a web browser, displaying a thumbnail image of the recognized multimedia content, and enabling a user to easily access multimedia content renderable on a browser media interface. For example, when the electronic apparatus 200 is a smart TV instead of a PC, renderable multimedia content may be easily and quickly selected through a remote controller and the selected multimedia content may be easily viewed.

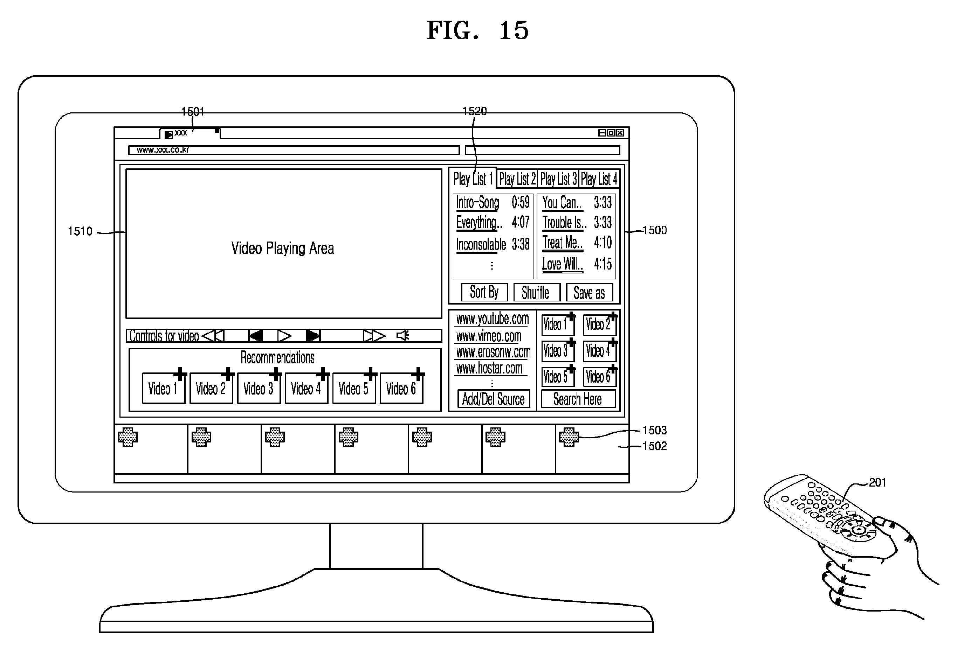

FIG. 15 is a diagram for describing a method of executing, by the electronic apparatus 200, a browser media interface 1500 and displaying multimedia content on the browser media interface 1500, according to various embodiments of the present disclosure.

Referring to FIG. 15, the electronic apparatus 200 may receive a predetermined user input of executing the browser media interface 1500. For example, the electronic apparatus 200 may receive at least one user input from among a selection input, a touch input, a gesture input, a voice command, a human-eye gesture input, and an input through a remote control apparatus, with respect to a GUI provided to a user. In the embodiment shown in FIG. 15, the electronic apparatus 200 is a smart TV that receives and plays multimedia content through a web browser 1501, and in this case, the electronic apparatus 200 may receive the user input of executing the browser media interface 1500 through the remote control apparatus 201, i.e., a remote controller.

Until the user input of executing the browser media interface 1500 is received, the electronic apparatus 200 may not receive or load multimedia content from a web page. The electronic apparatus 200 may execute the browser media interface 1500 based on the user input, and play multimedia content 1502 included in the web page through the browser media interface 1500. According to an embodiment, the electronic apparatus 200 may receive the user input of selecting the multimedia content 1502 displayed through the web browser 1501, by selecting the add interface 1503 displayed on the thumbnail image of the multimedia content 1502, and play the multimedia content 1502 in a playing region 1510 or add the multimedia content 1502 to a playlist 1520.

In the embodiment shown in FIG. 15, when the user views multimedia content through the electronic apparatus 200, such as a smart TV, instead of a PC, the user is able to execute the browser media interface 1500 by using the remote control apparatus 201 without having to select the multimedia content 1502 through the web browser 1501 and is able to easily view the multimedia content 1502 on the executed browser media interface 1500. Also, according to the current embodiment, the multimedia content 1502 displayed on the web browser 1501 is easily and quickly selected through the remote control apparatus 201 and is stored in the playlist 1502, and thus the multimedia content 1502 may be conveniently viewed.

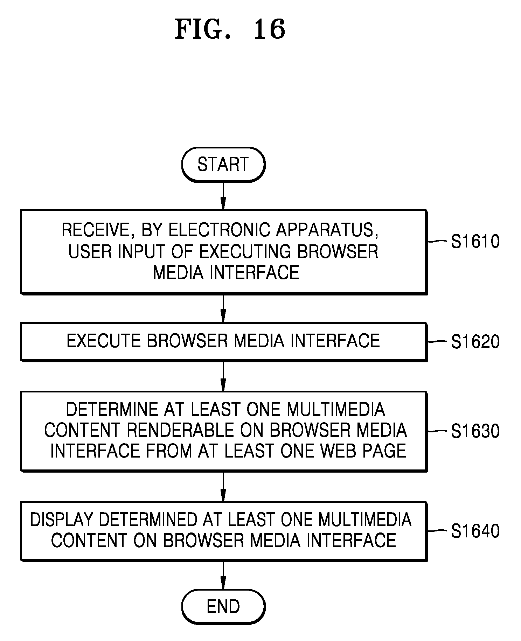

FIG. 16 is a flowchart of a method of displaying, by the electronic apparatus 200, multimedia content on a browser media interface, according to various embodiments of the present disclosure.

Referring to FIG. 16, in operation S1610 the electronic apparatus 200 (shown in FIG. 6) receives a user input of executing a browser media interface. According to an embodiment, the electronic apparatus 200 may not load multimedia content from a web page. The electronic apparatus 200 may receive at least one user input from among a selection input, a touch input, a gesture input, a voice command, a human-eye gesture input, and an input through a remote control apparatus, with respect to a GUI provided to a user.

Referring to FIG. 16, in operation S1620, the electronic apparatus 200 executes the browser media interface. According to an embodiment, the electronic apparatus 200 may display the browser media interface overlapped on a web browser.

Referring to FIG. 16, in operation S1630, the electronic apparatus 200 determines at least one multimedia content renderable on the browser media interface from at least one web page. According to an embodiment, the electronic apparatus 200 may determine multimedia content playable on the browser media interface or renderable by the web browser from the at least one multimedia content provided by the at least one web page. Since details about operation S1630 has been described with reference to FIGS. 3 through 5, repeating descriptions will not be provided again here.

Referring to FIG. 16, in operation S1640, the electronic apparatus 200 displays the determined at least one multimedia content on the browser media interface.

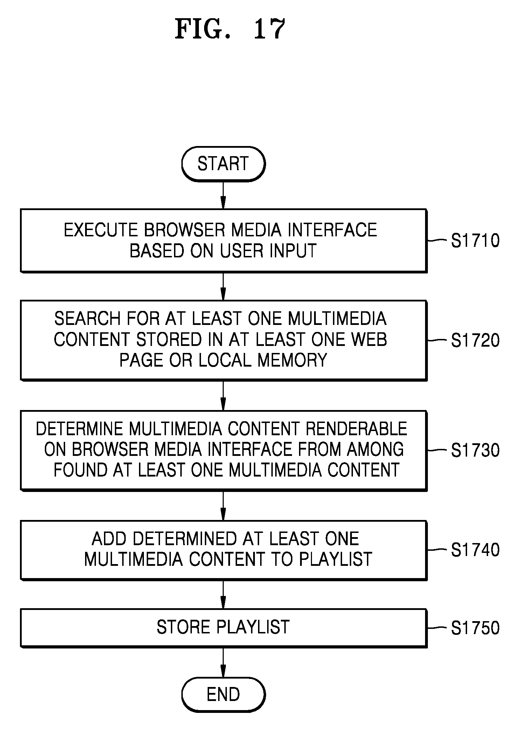

FIG. 17 is a flowchart of a method of displaying, by the electronic apparatus 200, at least one multimedia content selected based on a user input on a browser media interface, according to various embodiments of the present disclosure.

Referring to FIG. 17, in operation S1710 the electronic apparatus 200 executes a browser media interface based on a user input. According to an embodiment, the electronic apparatus 200 may receive at least one user input from among a selection input, a touch input, a gesture input, a voice command, a human-eye gesture input, and an input through a remote control apparatus, with respect to a GUI, and display the browser media interface based on the received user input on a display unit.

Referring to FIG. 17, in operation S1720, the electronic apparatus 200 searches for at least one multimedia content stored in at least one web page or a local memory. According to an embodiment, the electronic apparatus 200 may search for the multimedia content provided by the web page through the executed browser media interface, based on a web. Also, the electronic apparatus 200 may search for the multimedia content stored in the memory 1850 (shown in FIG. 18) included in the electronic apparatus 200.

Referring to FIG. 17, in operation S1730, the electronic apparatus 200 determines multimedia content renderable on the browser media interface from among found at least one multimedia content. According to an embodiment, the electronic apparatus 200 may determine multimedia content renderable on the browser media interface or renderable by a web browser from among at least one multimedia content provided by at least one web page. Since details about operation S1730 are described above with reference to FIGS. 3 through 5, repeating descriptions will not be provided again here.

Referring to FIG. 17, in operation S1740, the electronic apparatus 200 adds the determined at least one multimedia content to a playlist. According to an embodiment, the electronic apparatus 200 may automatically add at least one multimedia content renderable on the browser media interface to the playlist even when a user input of selecting multimedia content is not received.

Referring to FIG. 17, in operation S1750, the electronic apparatus 200 stores the playlist. According to an embodiment, the electronic apparatus 200 may store multimedia content included in the playlist on the browser media interface based on a web, or in the memory 1850 shown in FIG. 18 included in the electronic apparatus 200.

FIG. 18 is a block diagram of components of an electronic apparatus 1800, according to various embodiments of the present disclosure.

Referring to FIG. 18, the electronic apparatus 1800 may be a smart TV. The electronic apparatus 1800 of FIG. 18 may provide intuitive and convenient UX to a user by enabling the user to execute a browser media interface by simply using the remote control apparatus 201 (refer to FIG. 15) without having to select multimedia content provided by a web page by executing a web browser, and to view multimedia content included in a playlist that is automatically generated.

The electronic apparatus 1800 illustrated in FIG. 18 may include the same components as the electronic apparatus 1 of FIG. 1 and the electronic apparatus 200 of FIG. 2. Accordingly, repeating descriptions about components of the electronic apparatus 1800, which are the same as those described above with reference to FIGS. 1 and 2, will be omitted.

According to an embodiment, with reference to FIG. 18, the electronic apparatus 1800 may be configured as a client user computer in a server-client user network environment, or a peer computer system in a peer-to-peer network. The electronic apparatus 1800 may be realized as or integrated by a PC, a tablet PC, a personal portable information terminal, a mobile apparatus, a palmtop computer, a laptop computer, a desktop computer, a communication apparatus, a wireless phone, a wired phone, a web appliance, a network router, a switch or bridge, or another system capable of executing a certain command set, but is not limited thereto.

Referring to FIG. 18, the electronic apparatus 1800 may include a user input unit 1810, a processor or controller 1820, a display unit 1830, a sensor unit 1840, the memory 1850, a communication unit 1860, and an input/output unit 1870. The user input unit 1810, the controller 1820, the display unit 1830, the sensor unit 1840, the memory 1850, the communication unit 1860, and/or the input/output unit 1870 may each be configured as a hardware module, for example, an electronic circuit, a processor, a computer, an integrated circuit, an integrated circuit core, a micro-electro mechanical system (MEMS), a manual device, or a combination thereof.

The electronic apparatus 1800 may not include only the components shown in FIG. 18, and may include more or less than those shown in FIG. 18.

According to an embodiment, the electronic apparatus 1800 may be any one of, for example, a PC, a laptop computer, a tablet computer, a PDA, a media player, a mobile phone, a smart phone, a smart TV, a game console, or another mobile device. However, the electronic apparatus 1800 is not limited thereto.

Referring to FIG. 18, the user input unit 1810, the controller 1820, and the display unit 1830 of FIG. 18 are respectively the same as the user input unit 210, the controller 220, and the display unit 230 shown in FIG. 2, and thus repeating the details thereof will be omitted. Hereinafter, components of the electronic apparatus 1800 other than the user input unit 1810, the controller 1820, and the display unit 1830 will be described.

Referring to FIG. 18, the sensor unit 1840 may recognize a user input of selecting multimedia content displayed on a web browser or displayed on a browser media interface. According to an embodiment, the sensor unit 1840 may recognize a user input of enabling the electronic apparatus 1800 to execute the browser media interface. the sensor unit 1840 may include a touch sensor 1841, a motion recognition sensor 1842, a voice recognition sensor 1843, and an eye recognition sensor 1844.

Referring to FIG. 18, the touch sensor 1841 may recognize a touch input of touching a thumbnail image of multimedia content displayed on a browser media interface or web browser displayed on the display unit 1830, or a predetermined region where the thumbnail image is located. According to an embodiment, the touch sensor 1841 may be included in the user input unit 1810, and integrated to the display unit 1830 in a form of touch screen.

Referring to FIG. 18, the motion recognition sensor 1842 may recognize a pre-set gesture of a user. When the user performs the pre-set gesture, for example, an operation of swinging an arm in the air, the motion recognition sensor 1842 recognizes the pre-set gesture and transmits a pre-set electric signal to the controller 1820.

Referring to FIG. 18, the voice recognition sensor 1843 may recognize a pre-set voice command of the user. For example, the voice recognition sensor 1843 may recognize a voice command of the user executing the browser media interface, and transmit a related electric signal to the controller 1820.

Referring to FIG. 18, the eye recognition sensor 1844 may recognize human-eye gesture of the user. For example, the eye recognition sensor 1844 may recognize movement of eyes or pupils of the user looking at one multimedia content displayed on the browser media interface of web browser, and transmit an electric signal of selecting the multimedia content the user is looking to the controller 1820.

Referring to FIG. 18, the memory 1850 may store playlist including multimedia content selected by the user. For example, the memory 1850 may store a source file of multimedia content, metadata of the multimedia content, and a URL of a webpage including the multimedia content, wherein the multimedia content is selected by the user from among multimedia content displayed on the browser media interface or web browser and stored in the playlist. According to an embodiment, the memory 1850 may store at least one of a size of the source file, a format of the multimedia content, a category of the multimedia content, and genre of the multimedia content included in the playlist. According to an embodiment, the memory 1850 may store at least one of a user preference, a multimedia content search history of the user, and profile information of the user.

According to an embodiment, the memory 1850 may store a computer-readable recording medium 1851 for processes and control of the controller 1820. The computer-readable recording medium 1851 may include a program command, a data file, a data structure, or a combination thereof. The program command recorded on the computer-readable recording medium 1851 may be specially designed and configured for the present disclosure, or may be available to one of ordinary skill in the art in fields of computer software. Examples of the computer command not only include machine language codes prepared by a compiler, but also include high-level language codes executable by a computer by using an interpreter.

Referring to FIG. 18, the memory 1850 may be a main memory, a static memory, or a dynamic memory. The memory 1850 may include, but is not limited to, volatile and non-volatile computer-readable recording media, including but not limited to a random access memory, a read-only memory, a programmable read-only memory, an electrically programmable read-only memory, an electrically erasable read-only memory, a flash memory, a magnetic tape or disk, an optical media and the like. According to an embodiment, the memory 1850 may be an external storage device or database storing data. For example, the memory 1850 may be a hard drive, a compact disk (CD), a digital video disk (DVD), a memory card, a memory stick, a floppy disk, a universal serial bus (USB) memory device, or another arbitrary data storage device. According to an embodiment, the electronic apparatus 1800 may operate a web storage or cloud server performing a storage function of the memory 1850 on the Internet.

Referring to FIG. 18, the communication unit 1860 may extract a URL or hyperlink of at least one web page providing multimedia content, and receive a source file of the multimedia content from the at least one web page based on the extracted URL or hyperlink. According to an embodiment, the communication unit 1860 accesses a main server through the extracted URL or hyperlink, and query a DOM of the web page based on the extracted URL or hyperlink. Also, the communication unit 1860 may receive metadata of the multimedia content from the web page.

The communication unit 1860 may connect the electronic apparatus 1800 to another apparatus, a network node, a web server, or an external data server. According to an embodiment, the communication unit 1860 may be integrated in the controller 1820 in a form of a module.

Referring to FIG. 18, the communication unit 1860 may include a short-range wireless communication unit 1861, a mobile communication unit 1862, and a multimedia content receiving unit 1863.

Examples of the short-range wireless communication unit 1861 may include a Bluetooth communication unit, a Bluetooth low energy (BLE) communication unit, a near field communication (NFC) unit, a wireless local area network (WLAN) (Wi-Fi) communication unit, a Zigbee communication unit, an infrared data association (IrDA) communication unit, a Wi-Fi direct (WFD) communication unit, an ultra-wideband (UWB) communication unit, and an Ant+ communication unit, but are not limited thereto. The communication unit 1860 is not limitedly operated according to a certain standard and protocol. For example, the communication nit 1860 may use the standard network transmission (for example, TCP/IP, UDP/IP, HTML, or HTTP) with respect to the Internet and other packets.

Referring to FIG. 18, the multimedia content receiving unit 1863 receives a source file or metadata of multimedia content from a web page. Also, according to an embodiment, the multimedia content receiving unit 1863 may receive a broadcast signal and/or broadcast-related information from an external source through a broadcast channel. Examples of the broadcast channel may include a satellite channel and a terrestrial wave channel.

Referring to FIG. 18, the input/output unit 1870 is used for input and output of an audio signal or a video signal, and may include a speaker 1871 and a microphone 1872.

Referring to FIG. 18, the speaker 1871 may output sound of multimedia content played on a browser media interface to the outside of the electronic apparatus 1800. One or more of the speakers 1871 may be located in appropriate one or more locations of the electronic apparatus 1800. According to an embodiment, the speaker 1871 may be realized in a form of an earphone.

Referring to FIG. 18, the microphone 1872 may receive voice or sound from the outside of the electronic apparatus 1800, generate an electric signal based on the received voice or sound, and transmit the electric signal to the controller 1820. According to an embodiment, the microphone 1872 may generate an electric signal by amplifying a pre-set voice command of a user selecting multimedia content on a browser media interface or a web browser, and transmit the electric signal to the controller 1820.

It should be understood that embodiments described herein should be considered in a descriptive sense only and not for purposes of limitation. Descriptions of features or aspects within each embodiment should typically be considered as available for other similar features or aspects in other embodiments.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method of displaying multimedia content by an electronic device, the method comprising:
receiving a first user input for selecting at least one multimedia content included in at least one web page through a browser;
determining, from among the selected at least one multimedia content based on the first user input, at least one multimedia content renderable by a browser media interface that integrates and renders the selected at least one multimedia content; and
displaying, on the browser media interface, the determined at least one multimedia content,
wherein the browser media interface overlaps and is displayed on the browser.

2. The method of claim 1, wherein the receiving of the first user input comprises receiving at least one user input from among a touch input of touching a thumbnail image of the at least one multimedia content or a predetermined region including the thumbnail image, a voice command of selecting the at least one multimedia content, a gesture input of selecting the at least one multimedia content, and a human-eye gesture input of selecting the at least one multimedia content.

3. The method of claim 1, wherein the determining of the at least one multimedia content comprises:
extracting a uniform resource locator (URL) comprising the selected at least one multimedia content by querying a document object model (DOM) of the at least one web page; and
obtaining a file of the selected at least one multimedia content and metadata of the selected at least one multimedia content from the extracted URL.

4. The method of claim 1, wherein the displaying of the determined at least one multimedia content comprises:
generating a playlist comprising the renderable at least one multimedia content and sequentially rendering the comprised at least one multimedia content; and
displaying, in a first region of the browser media interface, the playlist.

5. The method of claim 4 further comprising:
buffering data of the at least one multimedia content comprised in the playlist through at least one buffering method from among serial buffering, parallel buffering, selected multimedia content buffering, and user selection-based buffering.

6. The method of claim 1, further comprising:
displaying, in a third region of the browser media interface, a recommendation region for recommending at least one multimedia content related to the determined at least one multimedia content,
wherein the related at least one multimedia content is recommended based on the playlist generated by a user who selected the at least one multimedia content, profile information of the user, setting information set by the user, and a multimedia content search history of the user.

7. The method of claim 1, further comprising:
recognizing existence of at least one multimedia content included in the at least one web page before the receiving of the first user input; and
displaying, on the browser media interface, a thumbnail image of the recognized at least one multimedia content by extracting a URL of a web page comprising the recognized at least one multimedia content,
wherein the receiving of the first user input comprises receiving a user input of selecting the thumbnail image.

8. An electronic apparatus for displaying multimedia content, the electronic apparatus comprising:
a user input unit configured to receive a first user input of selecting at least one multimedia content included in at least one web page and displayed through a browser;
a processor configured to control for determining, from among at least one multimedia content selected based on the first user input, at least one multimedia content renderable by a browser media interface that integrates and renders the selected at least one multimedia content; and
a display unit configured to display, on the browser media interface, the determined at least one multimedia content,
wherein the browser media interface overlaps and is displayed on the browser.

9. The electronic apparatus of claim 8 wherein the user input unit is further configured to receive at least one user input from among a touch input of touching a thumbnail image of the at least one multimedia content or a predetermined region including the thumbnail image, a voice command of selecting the at least one multimedia content, a gesture input of selecting the at least one multimedia content, and a human-eye gesture input of selecting the at least one multimedia content.

10. The electronic apparatus of claim 8, wherein the processor is further configured to control for:
extracting a uniform resource locator (URL) comprising the selected at least one multimedia content by querying a document object model (DOM) of the at least one web page, and
obtaining a file of the selected at least one multimedia content and metadata of the selected at least one multimedia content from the extracted URL.

11. The electronic apparatus of claim 8, wherein the processor is configured to control for:
generating a playlist comprising the renderable at least one multimedia content,
sequentially rendering the at least one multimedia content, and
displaying, in a first region of the browser media interface, the playlist.

12. The electronic apparatus of claim 11, wherein the processor is further configured to control for buffering data of the at least one multimedia content comprised in the playlist through at least one buffering method from among serial buffering, parallel buffering, selected multimedia content buffering, and user selection-based buffering.

13. The electronic apparatus of claim 8,
wherein the processor is further configured to control for generating a recommendation region for recommending at least one multimedia content related to the determined at least one multimedia content based on the playlist generated by a user who selected the at least one multimedia content, profile information of the user, setting information set by the user, and a multimedia content search history of the user, and
wherein the display unit is further configured to display, in a third region of the browser media interface, the recommendation region.

14. The electronic apparatus of claim 8,
wherein the processor is further configured to control for:
recognizing an existence of at least one multimedia content included in the at least one web page, and
generating a thumbnail image of the recognized at least one multimedia content by extracting a URL of a web page comprising the recognized at least one multimedia content,
wherein the display unit is further configured to display, on the browser media interface, the thumbnail image, and
wherein the user input unit is further configured to receive a user input of selecting the thumbnail image.

15. A non-transitory computer-readable recording medium having recorded thereon at least one program comprising commands, which when executed by a computer, performs the method of claim 1.
